# EUROPEAN PATENT APPLICATION

(11) **EP 2 800 280 A1**
(43) Date of publication of application: **05.11.2014**
(21) Application number: 12863469.8
(22) Date of filing: 25.09.2012
(51) Int. Cl.: H04B 1/38, G03H 1/04

(54) **MOBILE TERMINAL**

(30) Priority: 28.12.2011 KR 20110145046; 28.12.2011 KR 20110145048
(71) Applicant: LG Electronics Inc., Yeongdeungpo-gu Seoul 150-721 (KR)
(72) Inventor: KIM, Jonghwan, Incheon 403-774 (KR); CHOI, Hakho, Gunpo-Si Gyeonggi-Do 435-060 (KR); KIM, Juyeong, Jangan-Gu Suwon-Si 440-717 (KR); BAEK, Euihyeon, Seoul 153-806 (KR)
(74) Representative: Frenkel, Matthias Alexander
(86) International application number: PCT/KR2012/007708
(87) International publication number: WO 2013/100325

(57) **Abstract**

A mobile terminal according to one embodiment of the present invention comprises: a first body and a second body detachably attached to each other; a first light source on the first body so as to provide light to the second body; a first filming unit, on the second body, for forming a first hologram by means of light supplied from the first light source. Thus more diverse holographic images can be produced by replacing the first body.

## Description

### TECHNICAL FIELD

The embodiments of the present disclosure relates to a mobile terminal capable of displaying a hologram image.

### BACKGROUND ART

A terminal may be allowed to capture still images or moving images, play music or video files, play games, receive broadcast and the like for example as it becomes multifunctional so as to be implemented as an integrated multimedia player.

A terminal may be divided into a mobile/portable terminal and a stationary terminal according to its mobility. A portable terminal is a portable device having one or more of functions, such as performing voice and video telephony calls, inputting and outputting information, storing data and the like while being easily hand-carried.

Improvements in the structural and/or software elements of the terminal may be taken into consideration to support and enhance the function of such a terminal.

As an extended scheme of the function of the terminal, a terminal capable of displaying hologram images may be taken into consideration. Accordingly, various attempts have been carried out as a scheme of displaying hologram images.

As a result, a hologram device that can be mounted on a mobile terminal in a compact manner while forming various holograms may be taken into consideration.

### DISCLOSURE OF THE INVENTION

An aspect of the present disclosure is to provide a mobile terminal in which a first body and a second body are coupled to each other to display a hologram image as a terminal having a different form from that of the related art.

Another aspect of the present disclosure is to provide a mobile terminal provided with a hologram display device having multiple functions with a further enhanced structure.

In order to accomplish the foregoing task of the present disclosure, a mobile terminal according to an embodiment of the present disclosure may include a first body and a second body detachably coupled to each other, a first light source formed on the first body to supply light to the second body, and a first filming unit formed on the second body to receive light from the first light source so as to form a first hologram image.

According to an example associated with the present disclosure, a coupling portion for coupling the first body to the second body may include a light control unit formed to control light radiated from the first light source.

According to an example associated with the present disclosure, the first light source may include at least any one of a lamp, a laser and an LED.

According to an example associated with the present disclosure, the second body may further include a beam splitter formed to radiate light supplied from the first light source in at least two directions.

According to an example associated with the present disclosure, the second body may further include a first irradiation unit and a second irradiation unit configured to irradiate the radiated lights toward one surface of the first filming unit, respectively.

According to an example associated with the present disclosure, one end of at least one of the first filming unit, first irradiation unit and second irradiation unit may be fixed, and the other end thereof may be formed to revolve around said one end.

According to an example associated with the present disclosure, the mobile terminal may further include a second light source disposed on a rear surface of the first filming unit, and formed to radiate light through the first filming unit.

According to an example associated with the present disclosure, the second light source may be a transparent display.

According to an example associated with the present disclosure, a reflective portion may be formed to cover the transparent display.

According to an example associated with the present disclosure, at least one lens may be disposed between the transparent display and the reflective portion.

According to an example associated with the present disclosure, the reflective portion may be formed such that one end thereof is fixed, and the other end thereof revolves around said one end.

According to an example associated with the present disclosure, the first body may include a second filming unit configured to receive light from the first light source so as to form a second hologram image.

According to an example associated with the present disclosure, the first filming unit may be mounted on the second body in a replaceable manner.

Furthermore, in order to accomplish the foregoing task, according to another embodiment of the present disclosure, there is disclosed a mobile terminal, including a first body and a second body detachably coupled to each other, a first light source formed on the first body to supply light to the second body, a beam splitter formed to radiate light supplied from the first light source in at least two directions, and a first filming unit mounted on the second body to receive any one light radiated through the beam splitter so as to form a hologram image, wherein light supplied to the beam splitter is hologram light formed due to a second filming unit integrated into the first body.

According to an example associated with the present disclosure, light may be divided into first light and second light due to the beam splitter, and the first light may be radiated on one surface of the second body, and the second light may be irradiated on the first filming unit and then reflected on one surface of the second body, and the first light and light reflected from the first filming unit may be combined with each other to form a hologram composite image.

According to an example associated with the present disclosure, the mobile terminal may further include a second light source disposed on a rear surface of the first filming unit, and formed to radiate light through the first filming unit.

According to an example associated with the present disclosure, the beam splitter may include a first beam splitter configured to divide light supplied from the first light source into first light and second light, and second beam splitters configured to divide the first and the second light in at least two lights, respectively.

According to an example associated with the present disclosure, at least any one of lights splitted from the second beam splitters may be radiated on one surface of the second body, and at least another one thereof may be irradiated on the first filming unit and then reflected on one surface of the second body, and the lights may be combined with each other on one surface of the second body to form one or more hologram composite images.

Furthermore, in order to accomplish the foregoing task, according to still another embodiment of the present disclosure, there is disclosed a mobile terminal, including a first body and a second body detachably coupled to each other, a first light source formed on the first body to supply light to the second body, a beam splitter formed to radiate light supplied from the first light source in at least two directions, a first and a third filming unit configured to receive any one light radiated through the beam splitter so as to form a hologram image, and second light sources disposed between the beam splitter and filming units, respectively, wherein a first hologram image is formed on one surface of the second body, and a second hologram image is formed on the other surface thereof.

Furthermore, in order to accomplish the foregoing task, according to yet still another embodiment of the present disclosure, there is disclosed a mobile terminal, including a terminal body, a filming unit mounted on the body to form a hologram image when light is radiated, an irradiation unit formed to radiate the light on the filming unit, and a light source configured to supply light to the irradiation unit, wherein the irradiation unit is formed in a relatively movable manner with respect to the filming unit to control the radiation of light on one surface of the filming unit.

According to an example associated with the present disclosure, the irradiation unit and the light source may form an optical module in an integral manner, and the optical module may be formed in a slidably movable manner with respect to the body to control the radiation of light on one surface of the filming unit.

According to an example associated with the present disclosure, the optical module may be formed in a slidably movable manner in a second direction crossed with a first direction with respect to the body extended in the first direction.

According to an example associated with the present disclosure, the light radiation of a light source and an irradiation unit with respect to the filming unit may be controlled according to the slide movement distance to adjust the size of the hologram image.

According to an example associated with the present disclosure, the irradiation unit and the light source may form an optical module in an integral manner, and the optical module may be hinge-coupled to revolve with respect to the body.

According to an example associated with the present disclosure, the mobile terminal may further include a display disposed on a rear surface of the first filming unit, and formed to radiate light through the filming unit.

According to an example associated with the present disclosure, the display may be a transparent display.

Furthermore, in order to accomplish the foregoing task, according to still yet another embodiment of the present disclosure, there is disclosed a mobile terminal, including a first body and a second body coupled to each other in a relatively movable manner to implement a closed configuration and an open configuration, respectively, a filming unit mounted on the second body to form a hologram image when light is radiated, and an optical module having a light source and an irradiation unit to radiate the light to the filming unit, wherein the optical module is formed to be protruded from the second body, and formed in a relatively movable manner with respect to the filming unit to control the radiation of light on one surface of the filming unit.

According to an example associated with the present disclosure, the optical module may be formed in a slidably movable manner in a second direction crossed with a first direction with respect to the second body extended in the first direction.

According to an example associated with the present disclosure, the light radiation of a light source and an irradiation unit with respect to the filming unit may be controlled according to the movement distance of the optical module to adjust the size of the hologram image.

According to an example associated with the present disclosure, the light radiation of a light source and an irradiation unit with respect to the filming unit may be controlled according to the movement distance of the optical module to form different hologram images, respectively.

According to an example associated with the present disclosure, the second body may include an accommodation unit into which the optical module is inserted, and the optical module may be protruded from the accommodation unit or inserted into the accommodation unit according to the relative movement between the first body and second body.

According to an example associated with the present disclosure, the first body may include a display, and the hologram image may be displayed on one surface of the second body in an open configuration.

According to an example associated with the present disclosure, for the relative movement, the first body and the second body may be coupled to each other by a slide module, thereby allowing either one body to slidably move with respect to the other body.

According to an example associated with the present disclosure, for the relative movement, the first body and the second body may be coupled to each other by a hinge module, thereby allowing either one body to rotatably move with respect to the other body.

Furthermore, in order to accomplish the foregoing task, according to yet still another embodiment of the present disclosure, there is disclosed a mobile terminal, including a first body and a second body coupled to each other in a relatively movable manner to implement a closed configuration and an open configuration, respectively, a filming unit mounted on the second body to form a hologram image when light is radiated, and a hologram module having a light source and an irradiation unit to radiate the light on the filming unit, wherein light radiated from the filming unit is formed not to be covered by the first body to prevent a hologram image from being interfered by the first body in the open configuration.

According to an example associated with the present disclosure, the first body may be formed in a tiltable manner.

According to an example associated with the present disclosure, the filming unit may be formed in a tiltable manner.

Furthermore, in order to accomplish the foregoing task, according to still yet another embodiment of the present disclosure, there is disclosed a mobile terminal, including a terminal body, a filming unit mounted on the body to form a hologram image when light is radiated, an irradiation unit formed to radiate the light on the filming unit, and a light source configured to supply light to the irradiation unit, wherein the filming unit is formed in a movable manner to control a hologram image projected on any one surface of the body.

According to an example associated with the present disclosure, the irradiation unit may be formed in a movable manner in response to the movement of the filming unit.

A mobile terminal associated with at least one embodiment of the present disclosure, a first body may be detachably coupled to a second body, thereby displaying more various hologram images by replacing the first body.

Furthermore, a mobile terminal may display a hologram image in a state that individual elements constituting a terminal are overlapped with each other.

### BRIEF DESCRIPTION OF THE DRAWINGS

FIG. 1 is a block diagram illustrating a mobile terminal associated with an embodiment of the present disclosure.
FIG. 2 is a front perspective view illustrating an example of a mobile terminal associated with an embodiment of the present disclosure.
FIG. 3 is a front view illustrating a mobile terminal for explaining the operational state of a mobile terminal associated with the present disclosure.
FIG. 4 is a view illustrating a mobile terminal including a holography module associated with an embodiment of the present disclosure.
FIG. 5 is a conceptual view for explaining a holography principle.
FIG. 6 is a conceptual view for explaining a transmission type holography mode.
FIG. 7 is a conceptual view for explaining a reflection type holography mode.
FIGS. 8A through 8D are conceptual views illustrating a coupling relation between a first body and a second body associated with an embodiment of the present disclosure.
FIGS. 9A and 9B are views illustrating the operation of each configuration of a mobile terminal according to the embodiments of the present disclosure.
FIGS. 10A through 10E are views illustrating a mobile terminal according to the modified embodiments of a mobile terminal illustrated in FIGS. 9A and 9B.
FIGS. 11 and 12 are conceptual views illustrating an example of a mobile terminal for displaying a plurality of holograms.
FIG. 13 is a conceptual view illustrating an example for forming a hologram image in a folder type terminal.
FIGS. 14A and 14B are conceptual views illustrating an optical module and a filming unit disposed in a mobile terminal associated with an embodiment of the present disclosure.
FIGS. 15A and 15B are views illustrating an example of a filming unit in an angle-controlled manner associated with an embodiment of the present disclosure.
FIGS. 16A and 16B are views illustrating an optical module formed to revolve with respect to the body associated with an embodiment of the present disclosure.
FIGS. 17A and 17B are conceptual views illustrating an example of the arrangement of an optical module and a filming unit in a slide type terminal associated with an embodiment of the present disclosure.
FIGS. 18A and 18B are conceptual views illustrating a change of a portion on which light based on slide movement is irradiated associated with an embodiment of the present disclosure.
FIGS. 19A and 19B are conceptual views illustrating an example of a mobile terminal formed to implement a closed configuration and an open configuration associated with an embodiment of the present disclosure.
FIGS. 20A through 22C are conceptual views illustrating an example of a mobile terminal formed to reduce or cancel interference between the body and the filming unit.

### MODES FOR CARRYING OUT THE PREFERRED EMBODIMENTS

Hereinafter, a mobile terminal associated with the present disclosure will be described in detail with reference to the accompanying drawings. A suffix "module" or "unit" used for constituent elements used in the present disclosure is merely intended for easy description of the specification, and the suffix itself does not give any special meaning or function. Even in different embodiments according to the present disclosure, the same or similar reference numerals are designated to the same or similar configurations, and the description thereof will be substituted by the earlier description. Unless clearly used otherwise, expressions in the singular number used in the present disclosure may include a plural meaning.

A mobile terminal disclosed herein may include a portable phone, a smart phone, a laptop computer, a digital broadcast mobile device, a personal digital assistant (PDA), a mobile multimedia player (PMP), a navigation, and the like. However, the technical concept described therein may be also applicable to a stationary terminal such as a digital TV, a desktop computer, and the like.

### Entire configuration

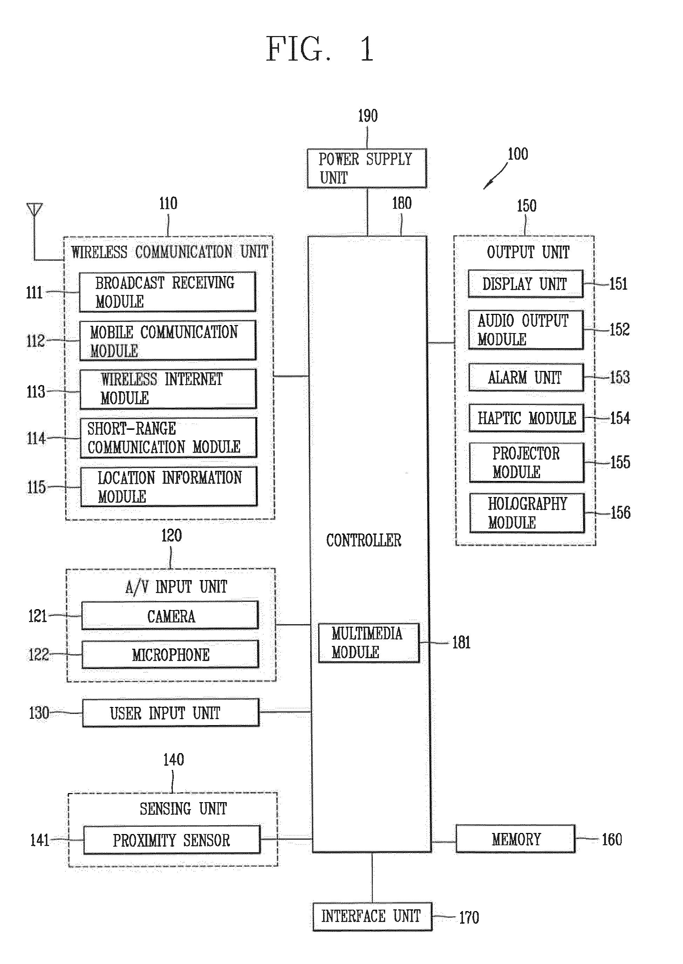

FIG. 1 is a block diagram illustrating a mobile terminal associated with an embodiment of the present disclosure.

The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the foregoing constituent elements will be described in sequence.

The wireless communication unit 110 may include one or more modules allowing radio communication between the mobile terminal 100 and a wireless communication system, or allowing radio communication between the mobile terminal 100 and a network in which the mobile terminal 100 is located. For example, the wireless communication unit 110 may include at least one of a broadcast receiving module 111, a mobile communication module 112, a wireless Internet module 113, a short-range communication module 114, a location information module 115, and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. Of course, the broadcast receiving module 111 may be configured to be suitable for every broadcast system transmitting broadcast signals as well as the digital broadcasting systems.

Broadcast signals and/or broadcast associated information received via the broadcast receiving module 111 may be stored in a memory 160.

The mobile communication module 112 transmits and receives wireless signals to and from at least one a base station, an external terminal and a server on a mobile communication network. Here, the wireless signals may include audio call signals, video call signals, or various formats of data according to the transmission and reception of text/multimedia messages.

The wireless Internet module 113 refers to a module for supporting wireless Internet access, and may be built-in or externally installed on the mobile terminal 100. Here, it may be used a wireless Internet access technique including WLAN (Wireless LAN), Wi-Fi (Wireless Fidelity) Direct, DLNA (Digital Living Network Alliance), Wibro (Wireless Broadband), Wimax (World Interoperability for Microwave Access), HSDPA (High Speed Downlink Packet Access), and the like.

The short-range communication module 114 refers to a module for supporting a short-range communication. Here, it may be used a short-range communication technology including BluetoothTM, Radio Frequency IDentification (RFID), Infrared Data Association (IrDA), Ultra WideBand (UWB), ZigBee, and the like.

The location information module 115 is a module for checking or acquiring the location of the mobile terminal, and there is a Global Positioning Module (GPS) module as a representative example.

Referring to FIG. 1, the A/V (audio/video) input unit 120 receives an audio or video signal, and the A/V (audio/video) input unit 120 may include a camera 121 and a microphone 122. The camera 121 processes image frames, such as still or moving images, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an open or closed configuration of the mobile terminal 100, a location of the mobile terminal 100, a presence or absence of user contact with the mobile terminal 100, an orientation of the mobile terminal 100, an acceleration/deceleration of the mobile terminal 100, and the like, so as to generate a sensing signal for controlling the operation of the mobile terminal 100. For example, when the mobile terminal 100 is a slide phone type, the sensing unit 140 may sense whether a sliding portion of the mobile terminal is open or closed. Furthermore, the sensing uniit 140 may sense the presence or absence of power provided by the power supply unit 190, the presence or absence of a coupling between the interface unit 170 and an external device. Meanwhile, the sensing unit 140 may include a proximity sensor 141.

Moreover, the sensing unit 140 may measure the surrounding noise (for example, 20 dB) of the mobile terminal 100 to generate a sensing signal or measure the surrounding brightness of the mobile terminal 100 to generate a sensing signal.

The output unit 150 is configured to generate an output associated with visual sense, auditory sense or tactile sense, and may include a display unit 151, an audio output module 152, an alarm unit 153, a haptic module 154, a projector module 155, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or capture mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, and a three-dimensional (3D) display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a mobile terminal body through a region occupied by the display unit 151 of the mobile terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device in addition to an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. The touch sensor may be configured to sense not only a touched position and a touched area, but also a touch pressure at which a touch object body is touched on the touch sensor.

When there is a touch input to the touch sensor, the corresponding signals are transmitted to a touch controller. The touch controller processes the signal(s), and then transmits the corresponding data to the controller 180. Accordingly, the controller 180 may sense which region of the display unit 151 has been touched.

The proximity sensor 141 may be arranged at an inner region of the mobile device 100 surrounded by the touch screen, or adjacent to the touch screen. The proximity sensor 141 may be provided as an example of the sensing unit 140. The proximity sensor 141 refers to a sensor to sense the presence or absence of an object approaching to a surface to be sensed, or an object disposed adjacent to a surface to be sensed, by using an electromagnetic field or infrared rays without a mechanical contact. The proximity sensor 141 has a longer lifespan and a more enhanced utility than a contact sensor.

The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity of a pointer having conductivity to the touch screen is sensed by changes of an electromagnetic field. In this case, the touch screen (touch sensor) may be categorized into a proximity sensor.

Hereinafter, for the sake of convenience of brief explanation, a behavior that the pointer is positioned to be proximate onto the touch screen without contact will be referred to as a "proximity touch", whereas a behavior that the pointer substantially comes in contact with the touch screen will be referred to as a "contact touch". For the position corresponding to the proximity touch of the pointer on the touch screen, such position corresponds to a position where the pointer faces perpendicular to the touch screen upon the proximity touch of the pointer.

The proximity sensor senses a proximity touch, and a proximity touch pattern (e.g., proximity touch distance, proximity touch direction, proximity touch speed, proximity touch time, proximity touch position, proximity touch moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to the functions performed in the mobile terminal 100 (e.g., sound alarming a call received or a message received, and so on). The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

A projector module 155 as a constituent element for performing an image project function using the mobile terminal 100 may display an image similar to or an image at least of which is different from that displayed on the display unit 151 on an external screen or wall.

Specifically, the projector module 155 may include a light source (not shown) configured to generate light (for example, laser light) for displaying an image on the outside, an image generation means (not shown) for generating an image to be displayed on the outside using the light generated by the light source, and a lens (not shown) for displaying an image on the outside at a predetermined focal distance. Furthermore, the projector module 155 may include an apparatus (not shown) capable of mechanically moving the lens or an entire module to adjust an image projection direction.

The projector module 155 may be divided into a Cathode Ray Tube (CRT) module, an LCD (Liquid Crystal Display) module, a Digital Light Processing (DLP) module, and the like. In particular, the DLP module is operated in a method of projecting an image generated by reflecting light generated from the light source on a Digital Micromirror Device (DMD) chip in an enlarged manner, and thus beneficial in fabricating a small-sized projector module 155.

Preferably, the projector module 155 may be provided on a lateral surface, a front surface or a rear surface of the mobile terminal 100 in the length direction. Of course, the projector module 155 may be provided even at any location of the mobile terminal 100 according to the need.

Next, a holography module 156 may include a holography storage medium and a holography output module to project a hologram image on the outside.

The holography storage medium as a storage medium for recording an interference pattern generated when an object wave and a reference wave are interfered with each other is formed of a material that responds according to the intensity of light such as a photopolymer.

Here, the holography output module may irradiate a reproduction wave similar to a reference wave on the holography storage medium according to the control of the controller 180, and display a hologram image generated through a diffraction phenomenon between the irradiated reproduction wave and the interference pattern recorded on the holography storage medium.

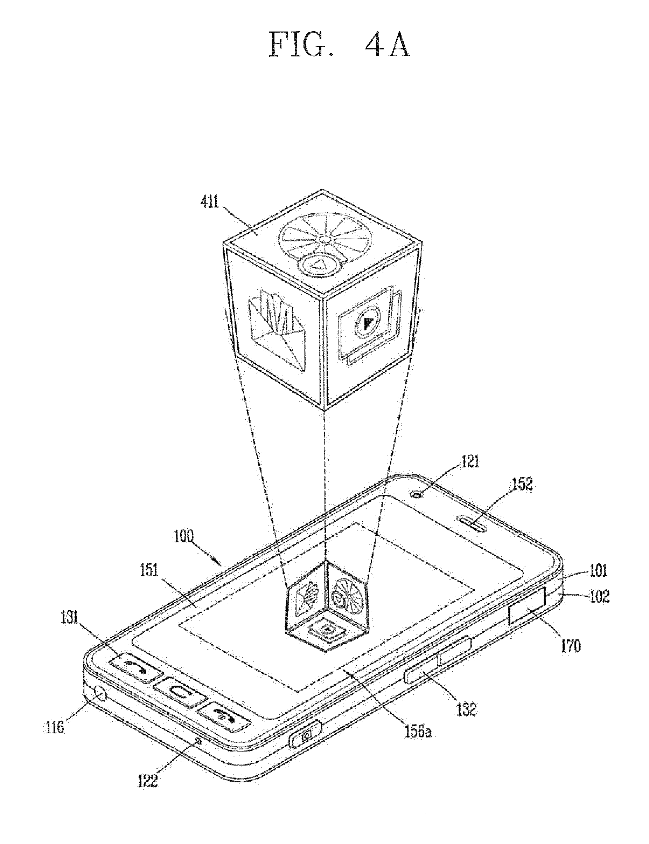

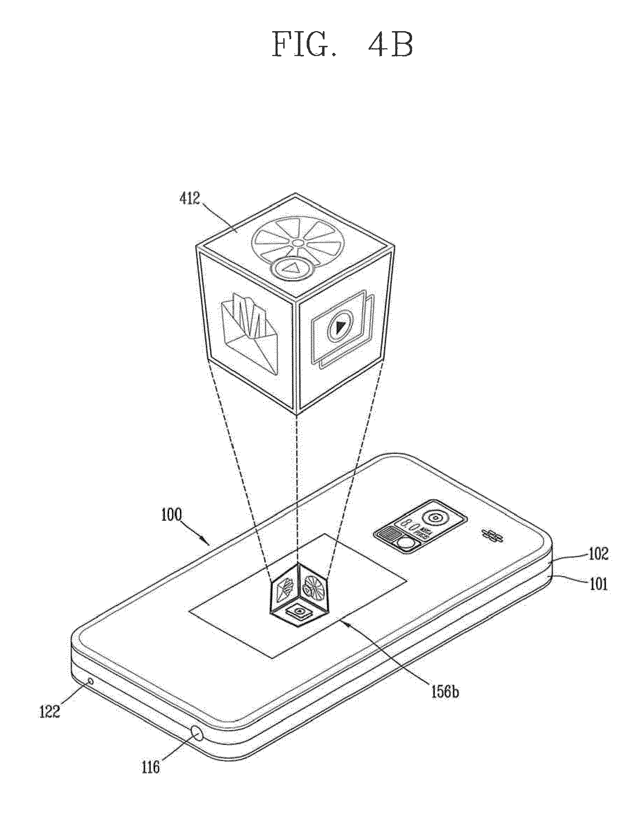

A specific method for projecting a hologram image will be described below in detail with reference to FIGS. 4 through 7.

Furthermore, as described above, it has been described that both the holography storage medium and holography output module are integrated into the holography module 156 and implemented at the same time, but it is merely a simple example, and may be also included in the mobile terminal 100 in a separate configuration.

The memory 160 may store a program for processing and controlling the controller 180, and perform a function for temporarily storing data (for example, phone books, messages, audio, still images, moving images, etc.). The memory 160 may also store use frequency for each of the data (for example, use frequency for each phone number, each message, and each multimedia) at the same time. Furthermore, the memory 160 may store data for the vibration and sound of various patterns displayed while making a touch input on the touch screen.

Moreover, in order to support the hologram image projection of the holography module 156, information on holography interference patterns may be stored therein. In other words, it may be possible to output a user's voice, an execution result of an application, and the like to the outside through the holography module 156 using the information stored in the memory 160.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate in association with a web storage which performs the storage function of the memory 160 on the Internet.

The interface unit 170 may generally be implemented to interface the mobile terminal with external devices connected to the mobile terminal 100. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

Furthermore, the interface unit may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

Furthermore, the controller 180 can perform a pattern recognition processing so as to recognize writing or drawing input carried out on the touch screen as text or image.

The power supply unit 190 receives external and internal power to provide power required for various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units designed to perform the functions described herein. In some cases, such embodiments may be implemented in the controller 180 itself.

For software implementation, the embodiments such as procedures or functions described in the present disclosure may be implemented with separate software modules. Each of the software modules may perform at least one function or operation described in the present disclosure. Software codes can be implemented by a software application written in any suitable programming language. The software codes may be stored in the memory 160 and executed by the controller 180.

### Description of mechanism

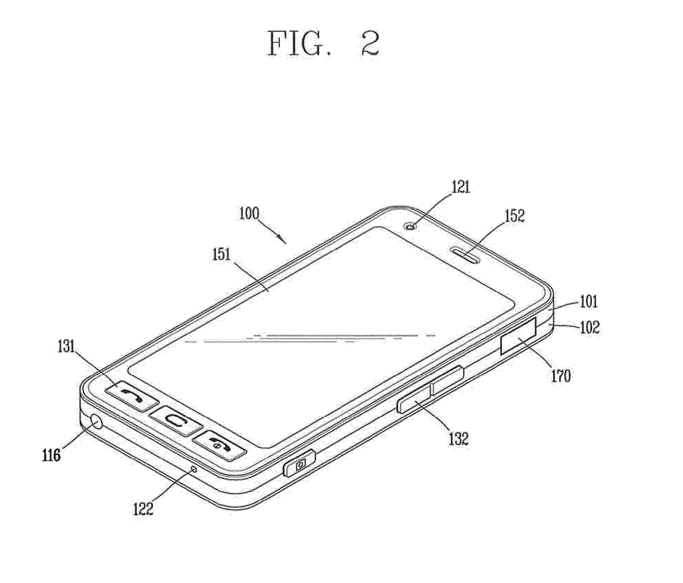

FIG. 2 is a front perspective view illustrating an example of a mobile terminal or portable terminal associated with an embodiment of the present disclosure.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

The terminal body includes a case (casing, housing, cover, etc.) forming an appearance of the terminal. In this embodiment, the case may be divided into a front case 101 and a rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (e.g., 131, 132), a microphone 122, an interface 170, and the like may be arranged on the terminal body, mainly on the front case 101.

The display unit 151 occupies most of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be set in various ways. For example, the first manipulation unit 131 may be used to receive a command, such as start, end, scroll, or the like, and the second manipulation unit 132 may be used to receive a command, such as controlling a volume level being outputted from the audio output unit 152, or switching it into a touch recognition mode of the display unit 151.

### Front surface touch

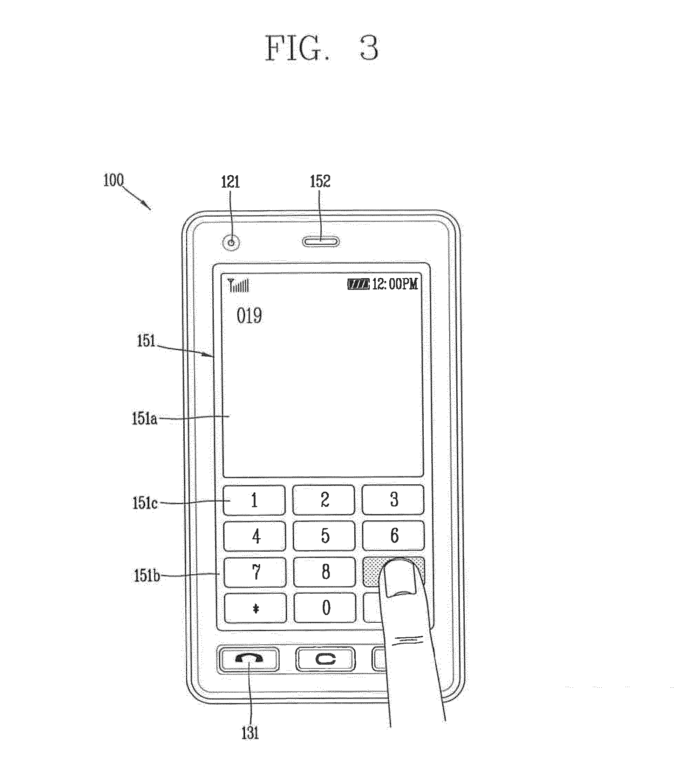

Here, an operation method in which the display unit 151 and the touch pad 135 are associated with each other will be described with reference to FIG. 3.

FIG. 3 is a front view illustrating a mobile terminal for explaining the operational state of a mobile terminal associated with the present disclosure.

Various kinds of visual information may be displayed on the display unit 151. The visual information may be displayed in the form of a character, a numeral, a symbol, a graphic, an icon, and the like.

For an input of the visual information, at least one of a character, a numeral, a symbol, a graphic, and an icon may be displayed with a predetermined arrangement so as to be implemented in the form of a keypad. Such a keypad may be referred to as a so-called "virtual keypad."

FIG. 3 illustrates a view in which a touch applied to a virtual keypad is received through a front surface of the terminal body.

The display unit 151 may be operated over an entire region or operated in a plurality of divided regions. In the latter case, it may be configured such that the plurality of regions are operated in a mutually associated manner.

For example, an output window 151 a and an input window 151b are displayed on an upper portion and a lower portion of the display unit 151, respectively. The output window 151 a and input window 151b are regions assigned to output and input information, respectively. A virtual keypad 151c displayed with a numeral for entering a phone number or the like is displayed on the input window 151b. Upon touching the virtual keypad 151c, a numeral or the like corresponding to the touched virtual keypad is displayed on the output window 151 a. When manipulating the first manipulation unit 131, a call connection for the phone number displayed on the output window 151a is attempted.

In addition to the input schemes disclosed in the above embodiments, the display unit 151 or touch pad 135 may be configured to receive a scroll-bases touch input. The user may scroll the display unit 151 or touch pad 135 to move an object displayed on the display unit 151, for example, a cursor or pointer located at the icon or the like. Moreover, when a user's finger is moved on the display unit 151 or touch pad 135, a finger's movement path may be visually displayed on the display unit 151. It may be useful to edit an image displayed on the display unit 151.

When the display unit 151 (touch screen) and touch pad 135 are touched at the same time within a predetermined period of time, one function of the terminal may be executed. The examples of being touched at the same time may include a case where a user clamps a terminal body using his or her thumb and index finger, and the like. Said one function may be an activation or deactivation of the display unit 151 or the touch pad 135.

Hereinafter, a hologram image expression method of a mobile terminal and a structure for the same that are applicable to the embodiments of the present disclosure will be described.

Prior to describing a specific hologram image, the shape of a mobile terminal including a holography module 156 will be described with reference to FIG. 4.

The holography module 156 may be disposed and mounted on a front or rear surface of the mobile terminal.

FIG. 4 is a view illustrating a mobile terminal including a holography module associated with an embodiment of the present disclosure.

First, referring to FIG. 4A, it is illustrated that the holography module 156 is provided on a front surface of the mobile terminal. Here, the holography module 156a may be provided on a front surface of the mobile terminal along with the camera 121, and can project and display a hologram image 411 generated according to the control of the controller 180.

Furthermore, as illustrated in FIG. 4B, the holography module 156b may be provided in a partial region of the rear surface of the mobile terminal, and may be included along with the camera 121, and projects and displays a hologram image 412 generated according to the control of the controller 180.

A hologram image implemented through the holography module 156 may include both planar and stereoscopic images.

Here, the stereoscopic image implemented through the holography module 156 may be largely divided into 2D and 3D stereoscopic images.

The 2D stereoscopic image mode as a monoscopic mode for providing the same image to both eyes is a method of disposing polyhedrons generated through one or more points, lines, planes, and their combinations in a virtual three-dimensional space according to the control of the controller 180, and displaying an image viewed from a particular point of sight.

Next, the 3D stereoscopic image mode as a stereoscopic mode for providing different images to both eyes is a method of using a principle in which humans feel a three-dimensional effect when viewed through their naked eyes. In other words, both human eyes view different planar images when viewing the same object due to a distance between each other. Such different planar images are transferred to his or her brain through retinas, and the brain combines them to feel the depth and reality of a stereoscopic image. Accordingly, there is a certain difference between each person, but binocular disparity due to a distance between both eyes causes to feel a three-dimensional effect, and therefore, the 3D stereoscopic image mode is a method of displaying an image using such binocular disparity.

Hologram images generated through the holography module 156 which will be described later may include both the foregoing planar and stereoscopic images, but for the sake of convenience of explanation, it will be described below by assuming that they are displayed in a 2D stereoscopic image mode. However, the content of the present disclosure will not be necessarily limited to this.

Hereinafter, a hologram image expression method of a mobile terminal applicable according to the embodiments of the present disclosure and a structure therefor will be described in detail.

A hologram image expression method may be understood as an image display method of simultaneously accumulating and reproducing all information, namely, both amplitudes and phases, carried by light, which is a wave, whereas an image in the related art records only the distribution of bright and dark sides of an object.

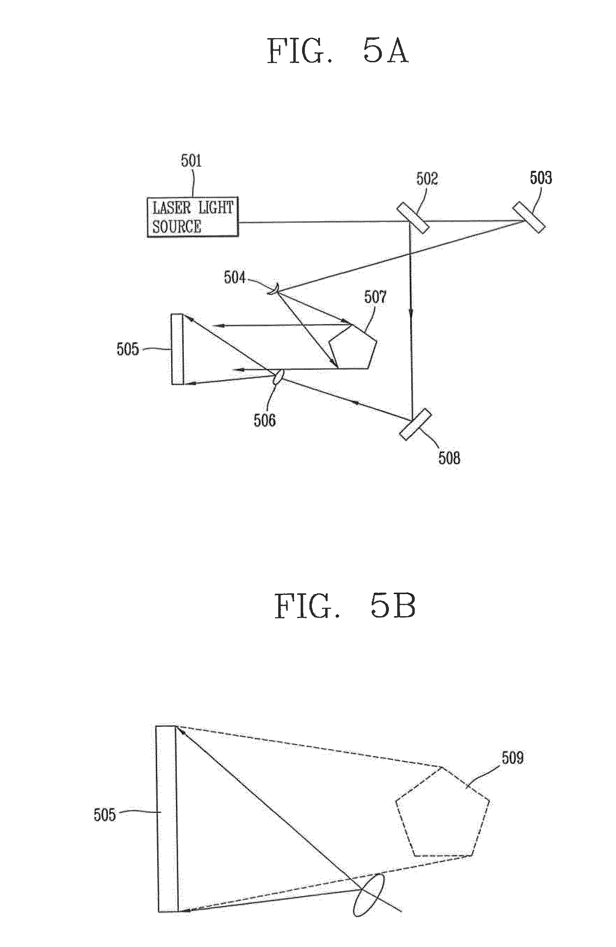

A hologram image expression method will be described with reference to FIG. 5.

FIG. 5 is a conceptual view for providing a holography principle.

First, referring to FIG. 5A, coherent light radiated from the laser light source 501 is divided into two beams through the splitter 502.

When one of the two beams is illuminated on a subject 507, light can be reflected from a surface of the subject, and hereinafter, the beam is referred to as an object wave.

Furthermore, the other beam may be diffused through a lens and directly illuminated on a front surface of the holographic photosensitive material 505, and hereinafter, the beam is referred to as a reference wave.

An object wave and a reference wave cause an interference phenomenon on the holographic photosensitive material 505 to form 500-1,500 very delicate and intricate patterns per millimeter. Here, a photo recorded with such interference patterns is referred to as a hologram.

Then, when a light beam such as a reference wave generated as illustrated in FIG. 5B is projected on the holographic photosensitive material 505, the interference patterns perform the role of a rotation grid to diffract light at a different position from a reference wave incident direction, and the diffracted light is merged and formed along with light reflected and generated from an initial object, thereby projecting a hologram image 509. In other words, an initial object light can be reproduced from a hologram, and an image expression method through this is called a hologram image expression method.

Here, an initial object is seen when viewed within a reproduced wavefront but the object is seen as if it is located therewithin. Then, if the point of view is moved, then the object is seen as if it is seen from a varying object viewing position. Furthermore, since an original wave front of the object is reproduced, it has a characteristic of being interfered with a wavefront coming from a very slightly modified object.

A hologram image expression method may be divided into a transmission type hologram image expression mode and a reflection type hologram image expression mode according to the reproduction method.

### (1) Transmission type hologram image expression mode

It is a mode in which light is illuminated from the rear side of a hologram to view an image that has passed therethrough in front of the hologram. In a transmission type hologram image expression mode, an object wave and a reference wave are exposed on a photo film in the same direction during the fabrication, and it has a characteristic in which the color of the generated hologram image is clear and bright.

### (2) Reflection type hologram image expression mode

It is a mode in which light is illuminated from the front side of a hologram to view an image reflected therefrom in front of the hologram, and fabricated such that the directions of an object wave and a reference wave are incident in opposite directions to each other. It has a characteristic in which the hologram image generated in the reflection type hologram image expression mode has an excellent three-dimensional effect.

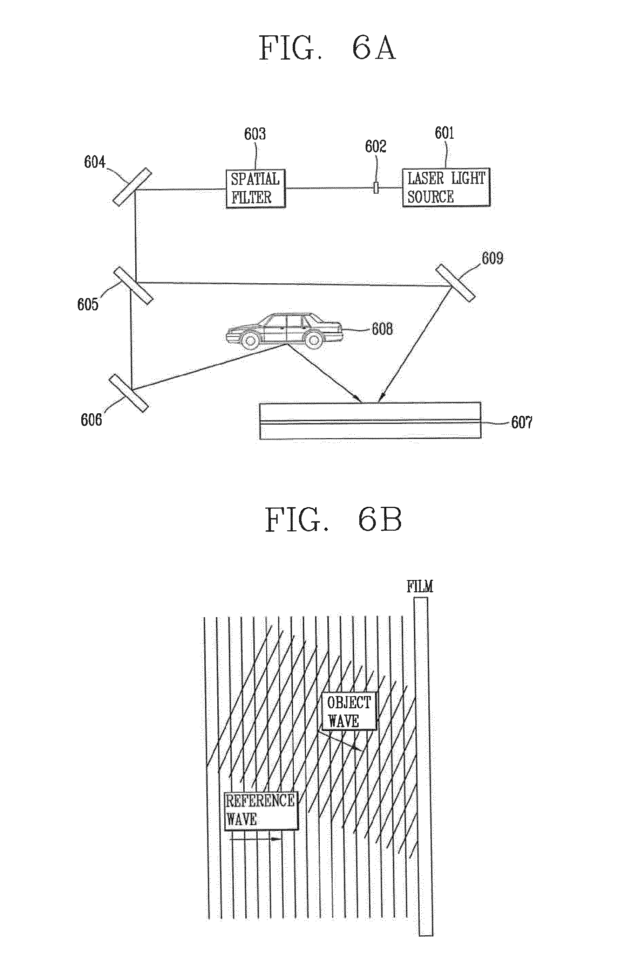

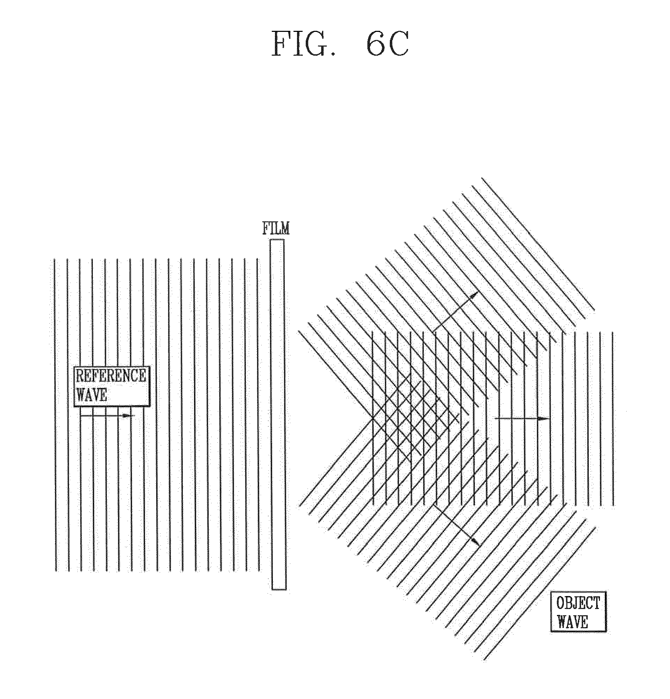

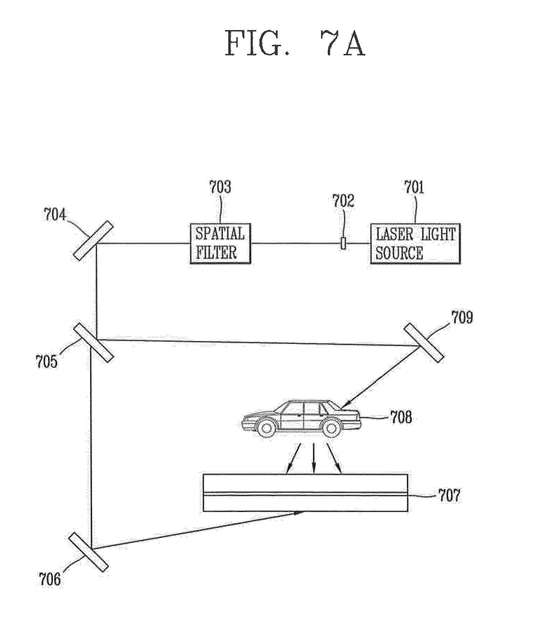

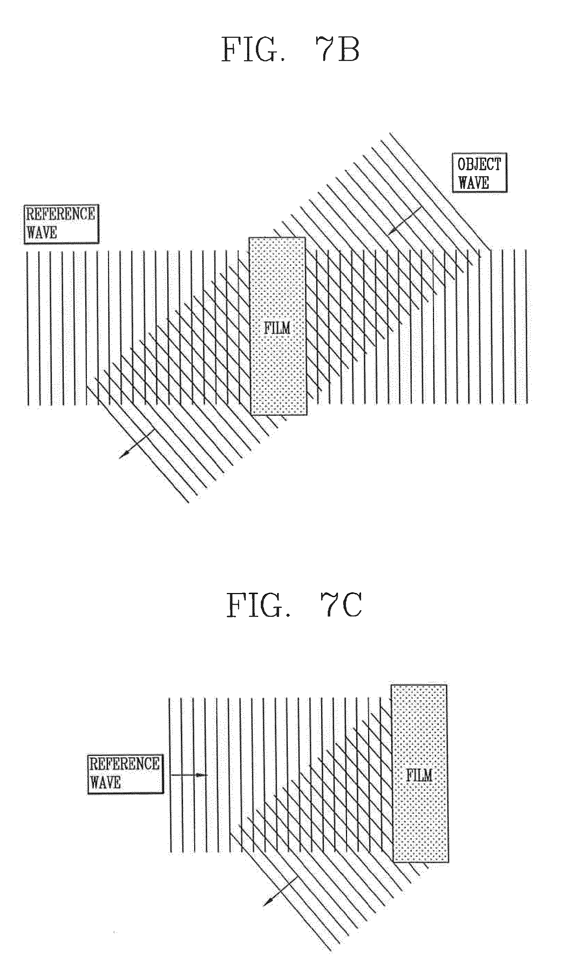

The transmission type hologram image expression mode and reflection type hologram image expression mode will be described in detail with reference to FIGS. 6 and 7.

FIG. 6 is a conceptual view for explaining a transmission type holography mode.

Referring to FIG. 6A, light coming out of the laser light source 601 passes through a spatial filter 602 and then spreads out as smooth spherical waves. One of spherical waves that have been divided into two beams at a 50:50 beam splitter 605 is illuminated on an object 608 to form an object wave, and the other one is illuminated on a film 607 as it is to form a reference wave. The object wave illuminated on the object 608 is also illuminated on the film 607.

Here, the object wave and reference wave illuminated on a film cause an interference phenomenon to form an interference pattern, and the interference pattern is recorded on the film 607.

In other words, as illustrated in FIG. 6B, the object wave and the reference wave are projected on the same surface of the film 607 to generate an interference pattern.

Then, as illustrated in FIG. 6C, when the reference wave is projected on the film 607, the object wave passes through in an opposite surface direction to an incident surface of the previous object wave and reference wave to generate a hologram image.

Next, FIG. 7 is a conceptual view for explaining a reflection type holography mode.

Referring to FIG. 7A, light coming out of the laser light source 701 passes through a spatial filter 702 and then spreads out as uniform spherical waves as illustrated in FIG. 6A, and is divided into two beams through a 50:50 beam splitter 705, wherein one is illuminated on an object 708 to form an object wave, and the other one is illuminated on a film 707 as it is to form a reference wave.

However, contrary to FIG. 6A, the reference wave and object wave are illuminated on the film 707 at positions opposite to each other.

In other words, as illustrated in FIG. 7B, the reference wave is projected on a left surface of the film 707, and the object wave is projected through an upper right surface of the film 707. Then, as illustrated in FIG. 7C, when the reference wave is projected on a film, the object wave is projected in an opposite direction to produce a hologram image.

The foregoing films 607, 707 are expressed as a holography storage medium in the present specification, and another constituent element capable of emitting light onto the film to produce a hologram image is expressed as a holography output module.

As described above, for the sake of convenience of explanation, according to the present specification, it is described that a holography storage medium and a holography output module are integrated into a holography module 156 and implemented at the same time, but it is merely a simple example, and they may be also included in the mobile terminal 100 in a separate configuration.

Furthermore, for the sake of convenience of explanation, it is assumed that a mobile terminal described below includes at least one of constituent elements illustrated in FIG. 1, and the display unit 151 is a touch screen.

Typically, an arrow or finger shaped graphic for indicating a specific object or selecting a menu on the display unit 151 is referred to as a pointer or cursor.

However, the pointer may also denote a finger or stylus pen for touch manipulation or the like.

Accordingly, in order to clearly distinguish the two, according to the present specification, a graphic displayed on the display unit 151 is referred to as a cursor, and a physical means such as a finger or stylus pen capable of performing a touch, a proximity touch, and a gesture is referred to as a pointer.

Furthermore, as described above, a hologram image may include both a planar image and a stereoscopic image, but for the sake of convenience of explanation, it will be described below by assuming that the hologram image is displayed in a 2D stereoscopic image mode.

On the other hand, according to an embodiment of the present disclosure, a hologram image may be displayed according to the set holography pattern.

The holography pattern denotes a pattern in which a hologram image projected through the holography module 156 is varied with preset patterns according to time and provided to the user.

The holography pattern may be set in various ways using the following schemes.

First, a distance difference between the holography output module and hologram image may vary according to time to set up a holography pattern.

In other words, a distance difference between the holography output module 156 and hologram image may vary according to time to move a hologram image projected through the holography module 156 in a vertical direction, thereby setting up a predetermined holography pattern.

Next, the shape of a hologram image projected from the holography module 156 may vary according to time to set up a holography pattern.

For example, the controller 180 may control a hologram image projected from the holography module 156 to have a circular shape and then control the hologram image to be changed to a rectangular shape according to the flow of time. Through this, a hologram image may be changed to various shapes according to time, thus setting up a holography pattern.

Furthermore, a method of moving a hologram image projected through the holography module 156 in a horizontal direction or rotating the hologram image may be also applicable thereto.

In other words, a projected hologram image may be horizontally moved, rotated or rotated while being horizontally moved while maintaining a distance difference between the holography module and hologram image, thereby setting up a holography pattern.

Furthermore, the color or size of a projected hologram image may be modified or the hologram image may be controlled to be on and off according to time, thereby setting up a holography pattern. Moreover, the setting of a holography pattern may be also allowed through projection brightness, refresh rate, lights illumination, vibration feedback, sound insertion, image insertion, repeated projection, and the like.

However, it has been described in the above by assuming that a holography pattern is set by an individual factor, but the holography pattern may be also set by a plurality of elements.

For example, the holography pattern may be set to move and rotate the projected hologram image in a horizontal direction while changing a distance difference between the holography module 156 and hologram image according to time.

Furthermore, it has been described in the above by assuming that a holography pattern is set for the entire hologram image, but it is merely exemplary content, and the holography pattern may be also applicable only to partial region of the hologram image.

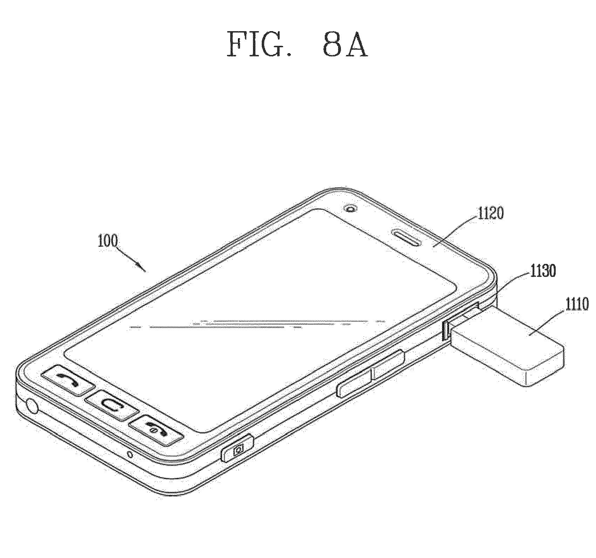

Hereinafter, first type mobile terminals in which any one body supplying light as a mobile terminal for generating a hologram image is coupled to another body to generate a hologram image will be described with respect to FIGS. 8A through 13.

FIGS. 8A through 8D are conceptual views illustrating a coupling relation between a first body and a second body associated with an embodiment of the present disclosure.

The mobile terminal 100 associated with the embodiments of the present disclosure may include a second body 1120 corresponding to the terminal body and a first body 1110 for supplying light to the second body 1120.

The mobile terminal may be a bar type, a watch type formed to be wearable such as a watch, a clip type in which any one body is coupled to another body such as a clip, a folder or flip type in which any one body is hinge-coupled to another body, a slide type in which any one body slidably moves with respect to another body, and the like.

In addition, the mobile terminal may be formed in a swivel type or swing type or a glasses type formed to be wearable such as goggles.

In this case, any one body may be the first body 1110 provided with a light source, and another body may be the second body 1120 provided with a filming unit.

As illustrated in FIG. 8A, according to an embodiment of the present disclosure, the first body 1110 may be detachably coupled to any one lateral surface of the second body 1120. The first body 1110 may be formed to be detachably coupled thereto, thereby providing various hologram images by replacing the first body 1110.

The second body 1120 may include a coupling portion 1130 to accommodate the first body 1110.

The coupling portion 1130 may be formed with a through hole formed on any one lateral surface of the second body 1120, and the first body 1110 may be detachably coupled to the through hole. The through hole constituting the coupling portion 1130 is sufficiently concave inward, and thus the first body 1110 coupled thereto is formed not to be protruded in an outer direction of the second body 1120.

The coupling portion 1130 may include a light control unit and a data transmission unit. The light control unit is formed to control light emitted from a first light source. The light control unit is formed to be open so as to transmit light when the first body 1110 is coupled thereto, and formed to be closed so as to seal the second body 1120 when the first body 1110 is separated therefrom.

The data transmission unit may electrically connect the first body 1110 to the second body 1120 to transmit and receive signals.

Furthermore, the first body 1110 may be coupled to the second body 1120 in an inclined manner.

In addition, the first body 1110 may include at least one light source. The light source may be any one of a lamp, a laser and an LED, or formed by combining at least two of them. Such a light source is merely an example, and the light source may be formed to include another unit emitting light.

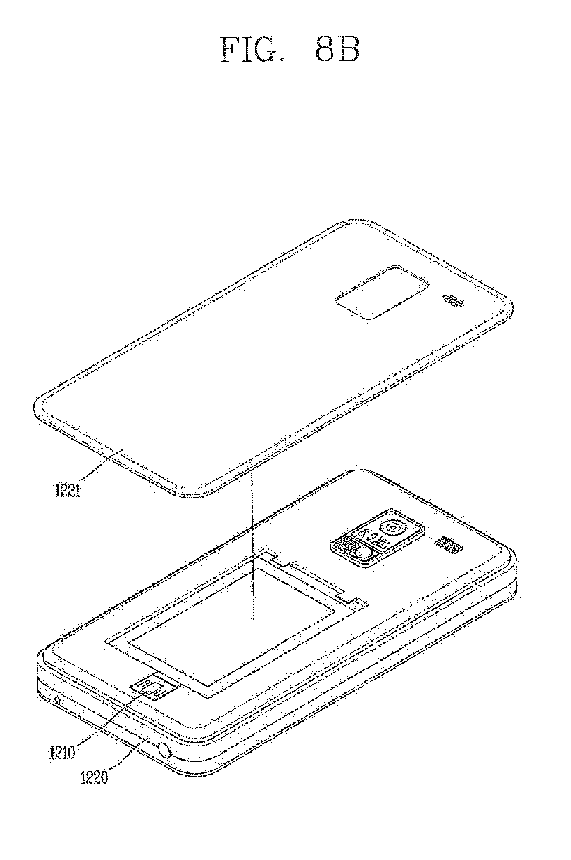

As illustrated in FIG. 8B, the first body 1210 may be coupled to an inner side of the second body 1220 from which a battery case 1221 is separated. The first body 1210 may be disposed to cover the battery or formed on the same plane as that of the battery.

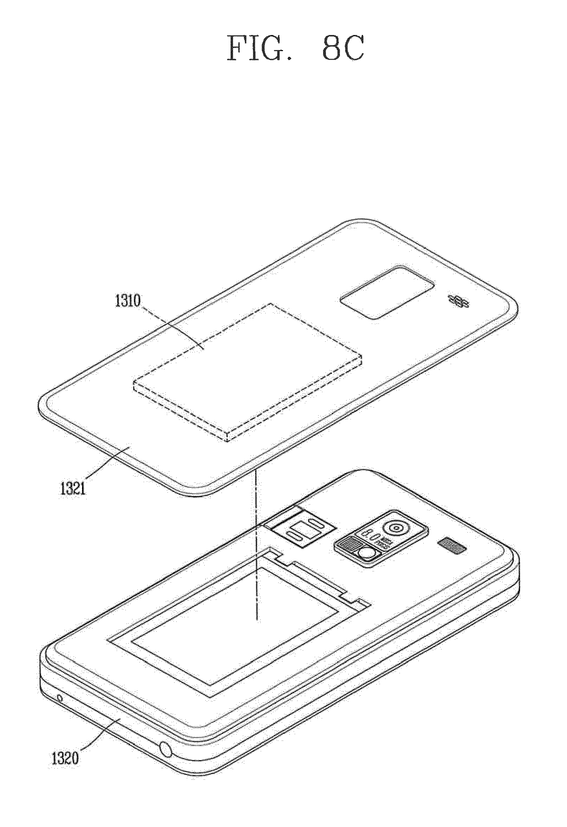

As illustrated in FIG. 8C, the first body 1310 may be formed to be integrated into the battery case 1321. When formed to be integrated into the battery case, the battery case may be replaced to make a change on the external appearance of the terminal as well as providing various hologram images.

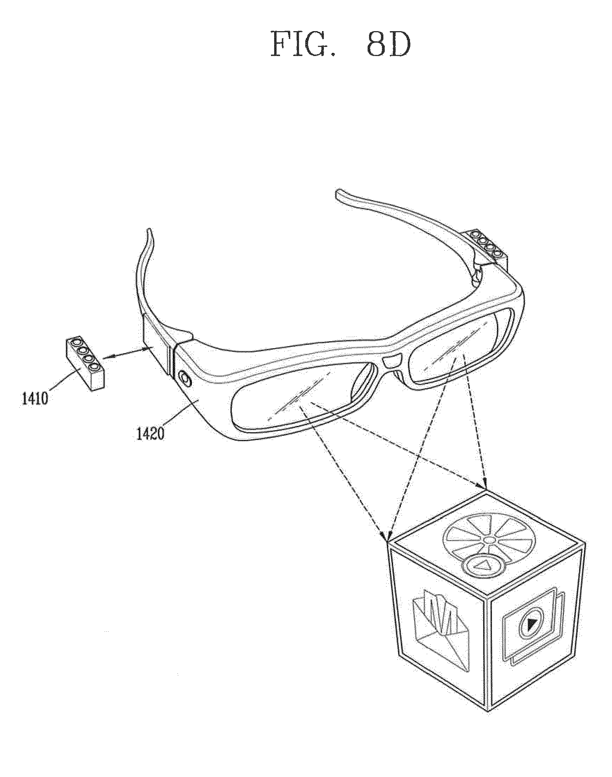

As illustrated in FIG. 8D, the second body 1420 may be goggles formed to be wearable for the user, and the first body 1410 may be coupled to the second body 1420.

As illustrated in FIGS. 8A through 8D, due to a first body detachably coupled to a second body, it may be possible to provide a function capable of implementing a hologram image as well as provide convenience and personalized appearance to the user.

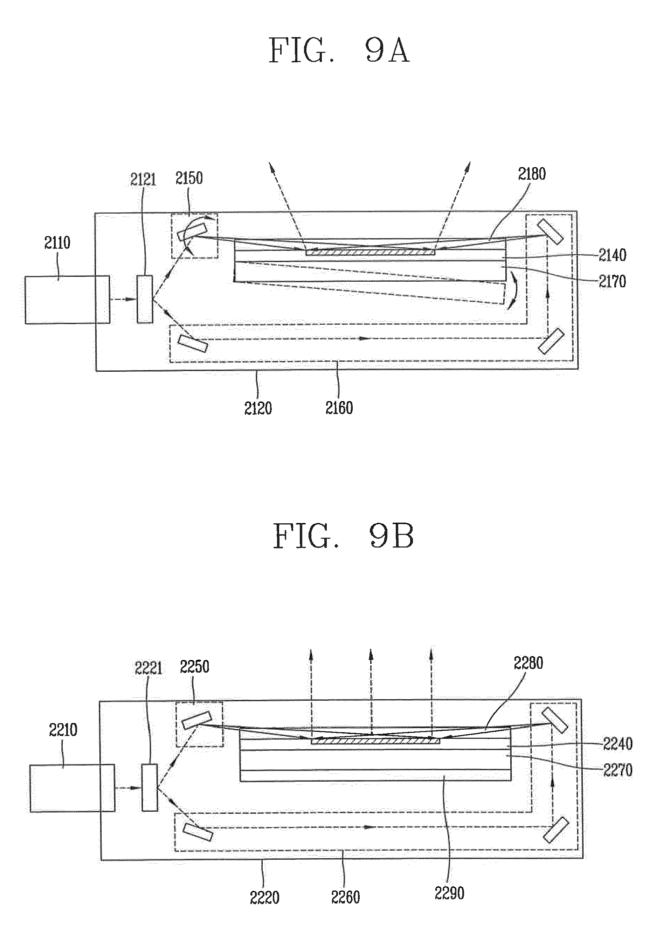

FIGS. 9A and 9B are views illustrating the operation of each configuration of a mobile terminal according to the embodiments of the present disclosure.

The first body 2110 may include at least one light source and detachably coupled to the second body 2120. According to an embodiment associated with the drawing, a light source formed on the first body 2110 is referred to as a first light source.

The second body 2120 may include a filming unit 2140 having an interference pattern.

The filming unit 2140 may be formed through a slit passing through the inner and outer sides of the second body 2120 in a replaceable manner. For an example, the filming unit 2140 may be formed in a slidably movable manner and detachably coupled to the second body 2120. In this manner, the filming unit 2140 may be replaced, thereby implementing more various hologram images.

Furthermore, the filming unit 2140 may be formed in a flexible manner or at least part thereof may be formed to be fixed on a substrate. The filming unit 2140 fixed on a substrate may reduce image distortion.

In addition, a touch panel 2180 may be formed to cover the filming unit 2140. The touch panel 2180 may be formed to include a transparent conductive pattern so as to sense a user's touch.

According to an embodiment associated with the drawing, the filming unit 2140 formed on the second body 2120 is referred to as a first filming unit 2140.

Furthermore, the second body 2120 may include a beam splitter 2121 formed to radiate light supplied from the first light source in at least two directions. The beam splitter 2121 may be formed to rotate to a predetermined angle so as to control the irradiation direction of light.

In addtion, the second body 2120 may include a first irradiation unit 2150 and a second irradiation unit 2160 to irradiate light radiated through the beam splitter 2121 toward one surface of the filming unit 2140. The first irradiation unit 2150 and second irradiation unit 2160 may include at least one optical mirror.

According to the following embodiments, an optical mirror is taken as an example, but a prism having at least two optical planes may be used instead of the optical mirror.

For an example, as illustrated in the drawing, the first irradiation unit 2150 may include one mirror, and the second irradiation unit 2160 may be formed to include three mirrors so as to form a predetermined path.

The mirror may be formed with a plane shape or formed to include a partially concave or convex portion. When at least part of the mirror is formed to be concave or convex, it may be possible to more effectively illuminate the first filming unit 2140 having a rectangular shape. Furthermore, the mirror may be formed to include a diffractive optical element such as a holographic optical element (HOE) or diffractive optical component (DOE).

In this manner, the mirror may form an optical path from a first light source to a first film. In other words, a path passing through the beam splitter 2121 from the first light source to the first film via the first irradiation unit 2150 may form a first path, and a path passing through the beam splitter 2121 from the first light source to the first film via the second irradiation unit 2160 may form a second path.

One end of the filming unit 2140, first irradiation unit 2150 or second irradiation unit 2160 is fixed, and the other end thereof is formed around said one end in a revolvable manner to control the angle of light irradiated to the filming unit 2140.

The filming unit 2140 may be layered to cover one surface of the display 2170. The display 2170 may be a second light source radiating light toward the filming unit 2140.

The display 2170 may include a light emitting element such as an active matrix organic light emitting diodes (AMOLED) as an example when formed in a non-transparent manner, and may include a light emitting element such as a top-emitting organic light emitting diodes (TOLED) as an example when formed in a transparent manner.

When formed in a non-transparent manner, an optical member may be coated on one surface of the display 2170 to inject or reflect light toward the filming unit 2140.

FIG. 9A illustrates an example of a mobile terminal when the display 2170 is formed in a non-transparent manner, and FIG. 9B illustrates an example of a mobile terminal when the display 2170 is formed in a transparent manner.

When the display 2270 is formed in a transparent manner, a reflective portion 2290 may be formed on the other surface of the display 2270 to reflect the incident light.

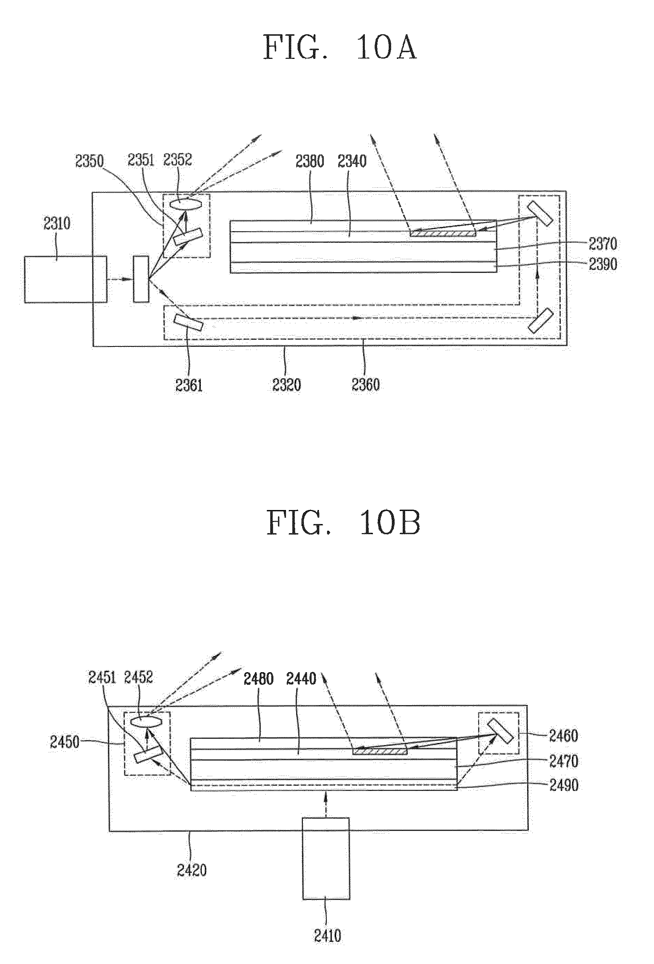

FIGS. 10A through 10E are views illustrating the modified embodiments of a mobile terminal illustrated in FIG. 9.

Though FIGS. 10A through 10E illustrate a case where the display is configured with a transparent display, at least some of the embodiments disclosed in FIGS. 10A through 10E may be also applicable to a non-transparent display. According to the present embodiments, a configuration same as or similar to that of a mobile terminal illustrated in FIG. 9 will be substituted by the earlier description.

According to the present embodiments, a mobile terminal may include a first body 2310 and a second body 2320, and the first body 2310 is detachably coupled to the second body 2320. The first body 2310 may include at least one light source.

Furthermore, the first body 2310 may include at least one filming unit 2340. Hereinafter, a filming unit formed on the first body 2310 is referred to as a second filming unit in the associated embodiments.

Here, light supplied from the first body 2310 to the second body 2320 is hologram light formed by a second filming unit integrated in the first body 2310 that receives light from a first light source.

The second body 2320 may include at least one display 2370 and filming unit 2340, and may include a beam splitter 2321 for splitting light supplied from the first body 2310, a first irradiation unit 2350 and a second irradiation unit 2360 forming the optical paths of light coming out of the beam splitter 2321, respectively.

As illustrated in FIG. 10A, a second path may be formed of a path passing through the beam splitter 2321 from the first light source to the first film via the second irradiation unit 2360. Here, light passing through the second path is reflected by the reflective portion 2290 disposed on a rear surface of a transparent display and radiated toward a predetermined space on the display 2370. The predetermined space on the display 2370 is a space in which a hologram image is formed.

In addition, a first path passes through the beam splitter 2321 from the first light source via the first irradiation unit 2350 and directly extends to a predetermined space on the display 2370.

Due to this, light that has passed through the first path and light that has passed through the second path are combined with each other in a predetermined space on the display 2370 to implement a hologram composite image.

Here, the first irradiation unit 2350 may include one mirror and one lens to form a first path, and the second irradiation unit 2360 may include three lenses to form a second path.

As illustrated in FIG. 10B, the first path passes through the beam splitter from the first light source via the first irradiation unit 2450 and directly extends to a predetermined space on the display 2470. The second path passes through the beam splitter from the first light source via the second irradiation unit 2460 toward the first film, and light is reflected by the reflective portion and extended to a predetermined space on the display 2470.

Due to this, light that has passed through the first path and light that has passed through the second path are combined with each other in a predetermined space on the display 2470 to implement a hologram composite image.

Here, the first irradiation unit 2450 may include one mirror and one lens to form a first path, and the second irradiation unit 2460 may include one lens to form a second path.

In FIG. 10B, the beam splitter and reflective portion are formed as an integral body, and formed on a rear surface of the display 2470. Due to this, the terminal can be slimmer, thereby simplifying the fabrication process. According to the following embodiments, a portion in which the beam splitter and reflective portion are formed as an integral body is referred to as a separate composite portion 2490.

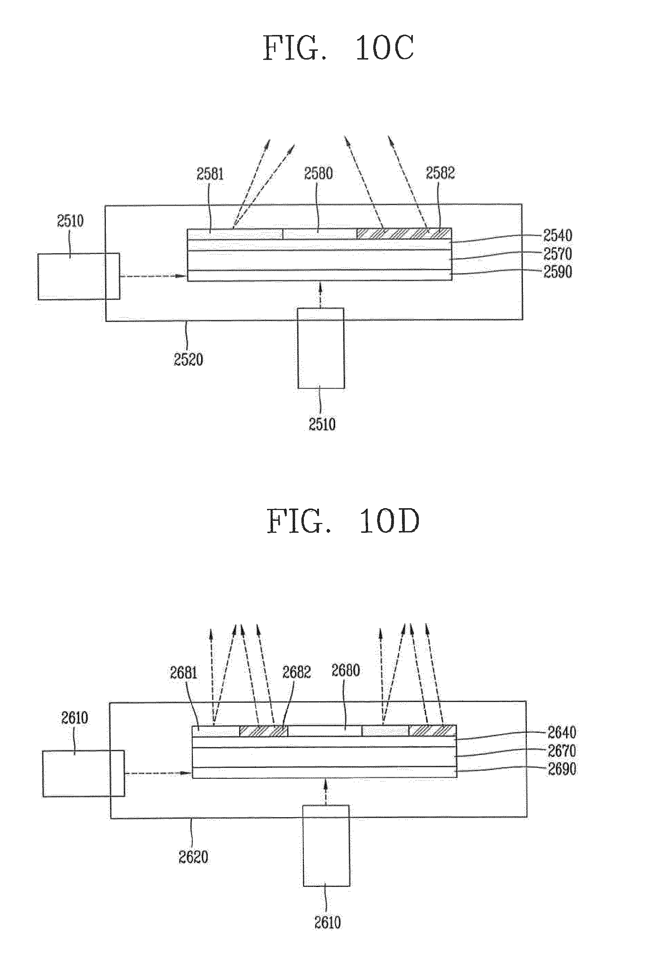

As illustrated in FIG. 10C, the first body 2510 may be coupled to any one lateral surface of the second body 2520. Furthermore, the separate composite portion 2590 may be formed as an integral body to include a beam splitter and a reflective portion, and disposed on a rear surface of the display 2570.

When the display 2570 is formed with a transparent display, the first path passes through the beam splitter from the first light source via the display 2570, first filming unit 2540 and lens 2581 and extends onto one surface of the display 2570. The second path passes through the beam splitter 2521 from the first light source via the display 2570, first filming unit 2540 and reflective sheet 2582, and then light is irradiated on the first filming unit 2540 again and extended onto one surface of the display 2570 via the reflective portion 2290.

Due to this, light that has passed through the first path and light that has passed through the second path are combined with each other in a predetermined space on the display 2570 to implement a hologram composite image.

A touch panel 2580 covering the first filming unit 2540 may include a lens 2581 and a reflective sheet 2582. The reflective sheet 2582 is formed such that incident light irradiates a predetermined region of the first filming unit 2540.

As illustrated in FIG. 10D, the first body 2610 may be coupled to any one lateral surface of the second body 2620. Furthermore, the separate composite portion 2690 may be formed as an integral body to include a beam splitter and a reflective portion, and disposed on a rear surface of the display 2670.

The beam splitter 2621 may include a first beam splitter for dividing light supplied from the first light source into first light and second light and second beam splitters for dividing the first light and the second light into at least two lights, respectively.

The present embodiment may include at least four optical paths.

For example, a first path passes through a display 2670, a first filming unit 2640 and a lens 2681 via the first beam splitter and any one of the second beam splitters from the first light source and extends onto one surface of the display 2670. A second path passes through the display 2670, first filming unit 2640 and reflective sheet 2682 via the first beam splitter and the second beam splitter from the first light source, and then irradiates on the first filming unit 2640 again and passes through the reflective portion and then extends onto one surface of the display 2670.

Furthermore, a third path passes through the display 2670, first filming unit 2640 and lens 2681 via the first beam splitter and another one of the second beam splitters from the first light source and extends onto one surface of the display 2670. A fourth path passes through the display 2670, first filming unit 2640 and reflective sheet 2682 via the first beam splitter and the second beam splitter from the first light source, and then irradiates on the first filming unit 2640 again and passes through the reflective portion and then extends onto one surface of the display 2670.

Due to this, light that has passed through the first path and light that has passed through the second path are combined with each other in a predetermined space (for example, first space) on the display 2670 to implement a first hologram composite image.

In addition, light that has passed through the third path and light that has passed through the fourth path are combined with each other in a predetermined space (for example, second space) on the display 2670 to implement a second hologram composite image.

In this manner, the embodiment illustrated in FIG. 10D implements at least two hologram composite images.

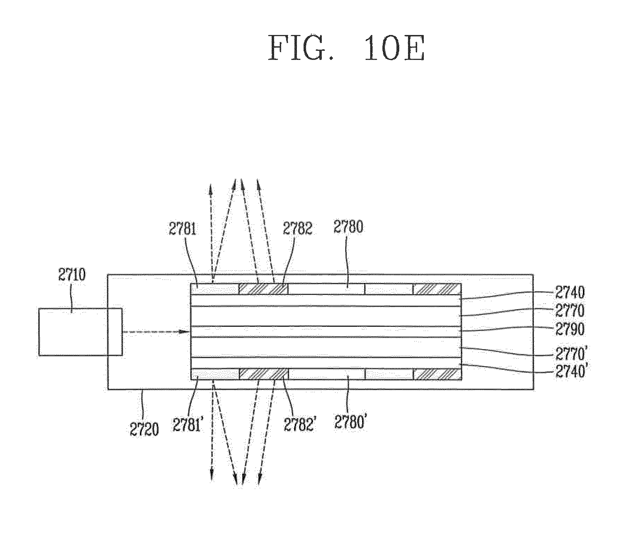

As illustrated in FIG. 10E, the first body 2710 may be coupled to any one lateral surface of the second body 2720. Furthermore, the separate composite portion 2790 may be formed as an integral body to include a beam splitter and a reflective portion, and disposed on a rear surface of the display 2670. A first display 2770 and a second display 2770' are formed to cover one surface and the other surface of the separate composite portion 2790, respectively.

In addition, first filming units 2740, 2740' may be disposed on the other surface of the first display 2770 and second display 2770' not facing the separate composite portion. Furthermore, touch panels 2780, 2780' covering the first filming units 2740, 2740' may include lenses 2781, 2781' and reflective sheets 2872, 2782'. The reflective sheets 2872, 2782' may be formed such that incident light irradiates a predetermined region of the first filming units 2740, 2740'.

The beam splitter may include a first beam splitter for dividing light supplied from the first light source into first light and second light and second beam splitters for dividing the first light and the second light into at least two lights, respectively.

An embodiment illustrated in FIG. 10E may include at least eight optical paths.

Of the paths, a first path passes a first display, a first filming unit and a lens via a first beam splitter and any one of second beam splitters from the first light source and extends onto one surface of the first display. A second path passes through the first display, first filming unit and reflective sheet via the first beam splitter and the second beam splitter from the first light source, and then irradiates on the first filming unit again and passes through the reflective portion and then extends onto one surface of the first display.

Light that has passed through the first path and light that has passed through the second path are combined with each other in a predetermined space (for example, first space) on the display to implement a first hologram composite image.

The remaining paths excluding the first and the second path have optical paths similar thereto. Due to this, it may be possible to implement at least four hologram composite images.

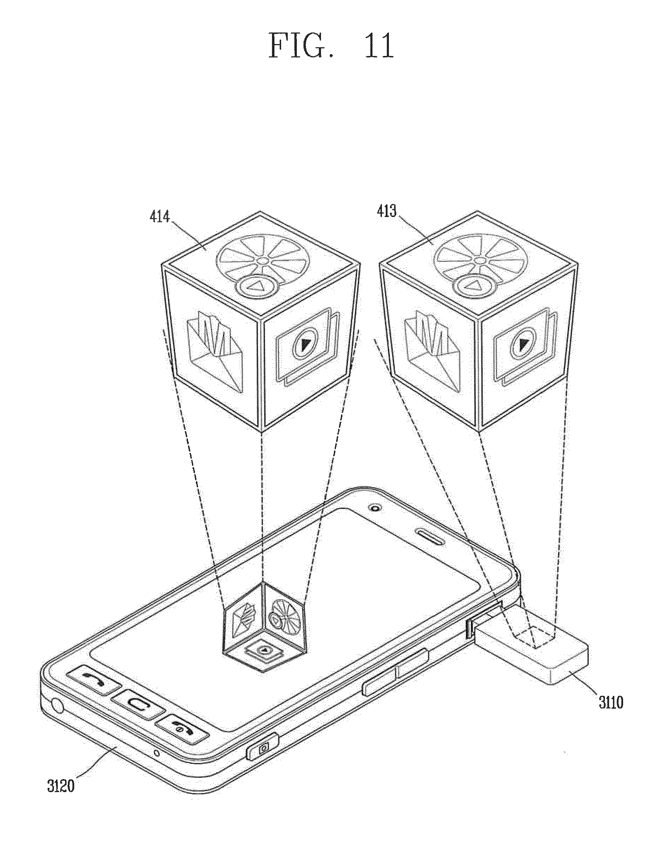

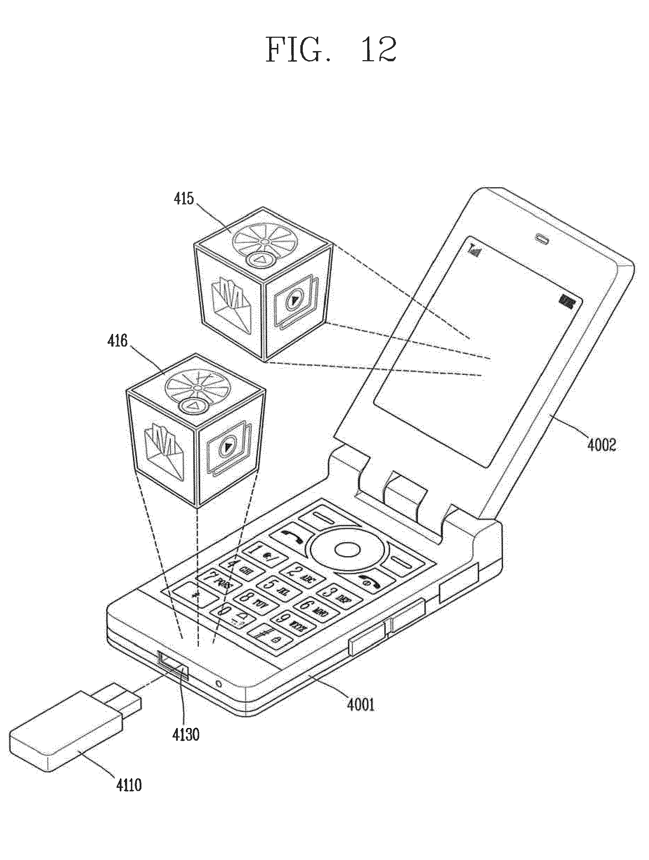

FIGS. 11 and 12 are conceptual views illustrating an example of a mobile terminal for displaying a plurality of holograms. According to the present embodiments, the configuration same as or similar to that of the mobile terminal illustrated in FIG. 9 will be substituted by the earlier description.

As illustrated in FIG. 11, the first body 3110 constituting a mobile terminal is detachable coupled to one lateral surface of the second body 3120.

The first body 3110 may include at least one light source and a filming unit 3140 to form a hologram image. Part of the hologram light formed on the first body 3110 is radiated to the outside through an opening portion formed on the first body 3110 to form a hologram image, and the remaining of the hologram light is supplied to the second body 3120.

The second body 3120 may include a display, a filming unit, a beam splitter and an irradiation unit, and receive hologram light from the first body to form a hologram image on one surface of the second body.

With the foregoing configuration, the first body 3110 and second body 3120 may form different or similar hologram images, respectively.

As illustrated in FIG. 12, the mobile terminal may be formed in a folder type. The body and folder portions are hinge-coupled to overlap with each other.

The first body 4110 having a light source may be coupled to the body or folder portion. The first body 4110 may include a filming unit and a mirror to form a hologram image, and supply hologram light passing through the filming unit to the body portion or folder portion.

Either one of the folder portion 4002 and body portion 4001 may be provided with a filming unit and an irradiation unit. Furthermore, either one of the folder portion and body portion may be provided with a beam splitter. Due to this, light supplied from the first body may be irradiated on the filming unit and then a hologram image may be formed.

As illustrated in FIG. 12, a first hologram image 416 may be formed by the first body 4110 coupled to the body portion, and hologram light may be supplied to the folder portion from the first body, and a second hologram image 415 may be formed by the filming unit and irradiation unit.

Here, the first hologram image and second hologram image may be coupled to each other to form a hologram composite image.

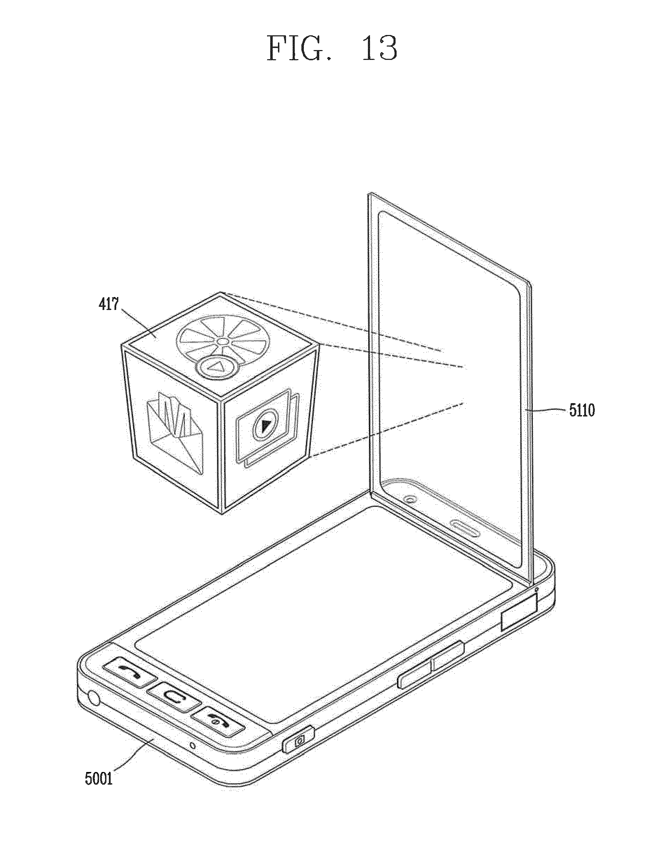

FIG. 13 is a conceptual view illustrating an example for forming a hologram image in a folder type terminal. According to the present embodiments, the configuration same as or similar to that of the mobile terminal illustrated in FIG. 9 will be substituted by the earlier description.

The first body (not shown) is detachably coupled to the second body 5001. The third body 5110 hinge-coupled to the second body 5001 may be formed any one side of the second body 5001.

The first body may be provided with a light source to supply light to the second body 2120. The second body may be provided with irradiation units to irradiate light toward the third body.

The third body may include a filming unit to form a hologram image when light is irradiated from the second body. In this manner, when a filming unit is formed on the third body, the filming unit is more easily replaceable.

Furthermore, different hologram images may be formed according to an inclined angle of the third body.

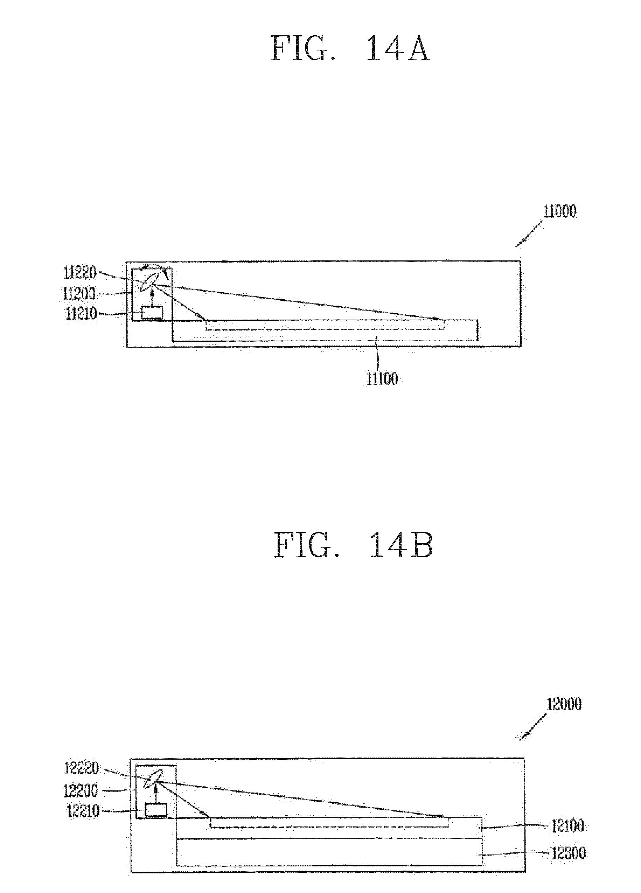

Such a hologram image may be also applicable to a flip type terminal. Hereinafter, second type mobile terminals formed such that either one of the light source and irradiation unit relatively moves with respect to the other one as a mobile terminal for generating a hologram image will be described with reference to FIGS. 14A through 22C.

As illustrated in FIG. 14A, a filming unit 11110, a light source 11121, and an irradiation unit 11122 may be disposed on the terminal body 11110.

The filming unit 11110 may include an interference pattern to implement a hologram image.

The filming unit 11110 may be formed through a slit passing through an inner side and an outer side of the body in a replaceable manner. For an example, the filming unit 11110 may be formed in a slidably movable manner to be detachably coupled to the body. In this manner, the filming unit 11110 may be replaced to implement more various hologram images.

Furthermore, the filming unit 11110 may be formed in a flexible manner or at least part of the filming unit 11110 may be fixed on a substrate. The filming unit 11110 fixed to the substrate may reduce image distortion.

In addition, a touch panel may be formed to cover the filming unit 11110. The touch panel may be formed to include a transparent conductive pattern to sense a user's touch.

The light source 11121 may be any one of a lamp, a laser and an LED, or formed by combining at least two of them. Such a light source 11121 is merely an example, and the light source 11121 may be formed to include another unit emitting light.

The irradiation unit 11122 may be formed such that light radiated from the light source 11121 is irradiated at a predetermined angle toward one surface of the filming unit 11110. The irradiation unit 11122 may include one or more optical mirrors.

According to the following embodiments, an optical mirror is taken as an example, but a prism having at least two optical planes may be used instead of the optical mirror.

The mirror may be formed with a plane shape or formed to include a partially concave or convex portion. When at least part of the mirror is formed to be concave or convex, it may be possible to more effectively illuminate the filming unit 11110 having a rectangular shape. Furthermore, the mirror may be formed to include a diffractive optical element such as a holographic optical element (HOE) or diffractive optical component (DOE).

The irradiation unit 11122 and light source 11121 may be formed with one optical module 11120 as an integral body. Here, a distance between the irradiation unit 11122 and light source 11121 may be controlled, and the irradiation unit 11122 and light source 11121 may be formed in an angle-controlled manner, respectively, thereby more effectively controlling light toward the filming unit 11110.

On the contrary to FIG. 14A, according to FIG. 14B, a display is formed to cover at least part of the filming unit 11210.

Here, the display may be another light source 11221 radiating light toward the filming unit 11210.

The display may include a light-emitting element such as active matrix organic light emitting diodes (AMOLED), for an example, when formed in a non-transparent manner, and may include a top-emitting organic light emitting diodes (TOLED), for an example, when formed in a transparent manner.

When formed in a non-transparent manner, an optical member may be coated on one surface of the display to inject or reflect light toward the filming unit 11210.

When the display is formed in a transparent manner, a reflective portion may be formed on the other surface of the display to reflect the incident light.

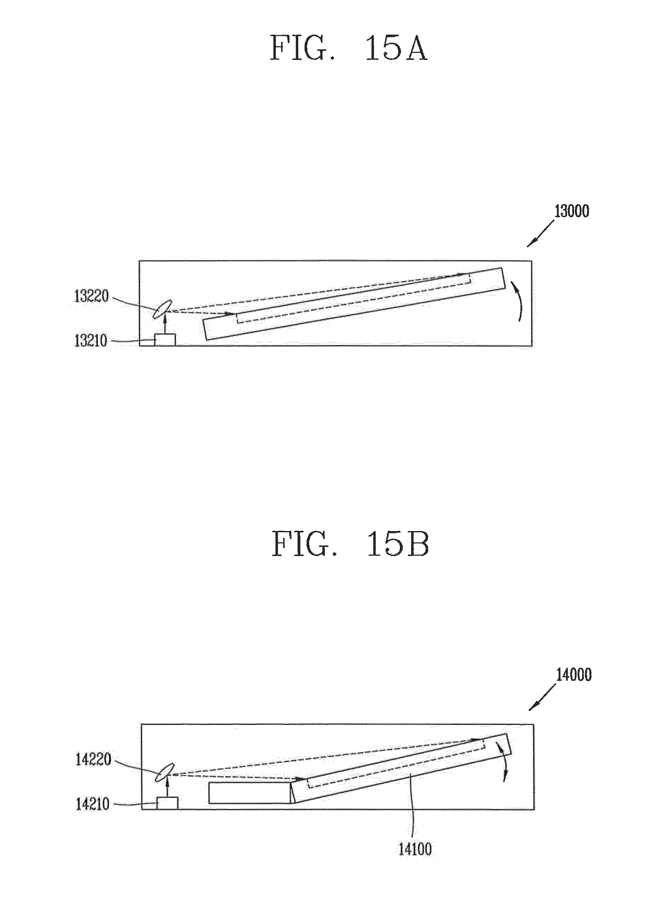

FIGS. 15A and 15B are views illustrating an example of a filming unit in an angle-controlled manner associated with an embodiment of the present disclosure.

The filming unit 11310 may be formed to relatively move with respect to the irradiation unit 11322. Different hologram images may be formed respectively according to the angle of light irradiated on one surface of the filming unit 11310.

To this end, a hologram pattern formed on the filming unit 11310 may be formed to display a first hologram image at a first irradiation angle, and formed to display a second hologram image at a second irradiation angle. In other words, the filming unit 11310 may include a plurality of hologram patterns to display different hologram images, respectively, according to the angle.

The angle of the irradiation unit 11322 and the angle of the filming unit 11310 may be controlled to control an irradiation angle.

In order to control the angle of the filming unit 11310, a hinge is formed at one end of the irradiation unit 11322, and the irradiation unit 11322 is formed to revolve around the hinge, or a shaft is connected to any one portion of the irradiation unit 11322, and the irradiation unit 11322 is formed to revolve around the shaft.

Furthermore, the irradiation unit 11322 may be formed in an entirely revolvable manner as illustrated in FIG. 15A or formed in a partially revolvable manner as illustrated in FIG. 15B.

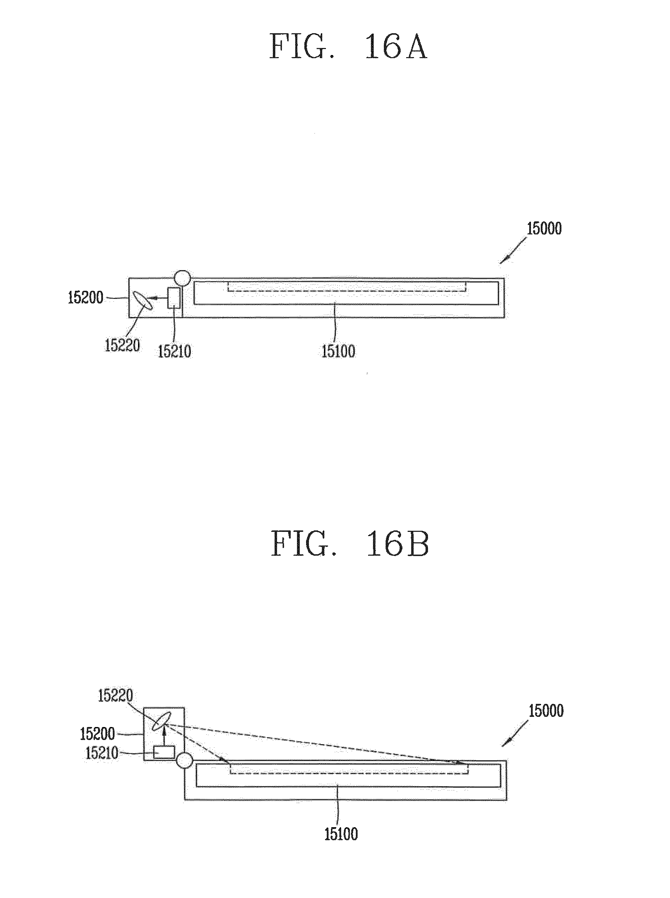

FIGS. 16A and 16B are views illustrating an optical module 11520 formed to revolve with respect to the body associated with an embodiment of the present disclosure.

As illustrated in the drawing, the optical module 11520 may be coupled to one end of the terminal body 11500 in a revolvable manner.

The terminal body 11500 and optical module 11520 may be hinge-coupled to each other.

FIG. 16A illustrates a configuration prior to revolution, and FIG. 16B is a configuration subsequent to revolution. Light may be irradiated on one surface of the body in a state that the optical module 11520 is revolved to from a hologram image. The filming unit 11510 is formed on one surface of the body.

Here, the filming unit 11510 may include a plurality of holography patterns to display different hologram images, respectively, according to the angle.

The revolution angle of the optical module 11520 toward the filming unit 11510 may be formed in a controlled manner, and the filming unit 11510 may be also formed in an angle-controlled manner.

In this case, the revolution angle of the optical module 11520 may be controller to form different hologram images, respectively, according to the revolution angle. Furthermore, at least one hologram image may be formed in a space on one surface of the body.

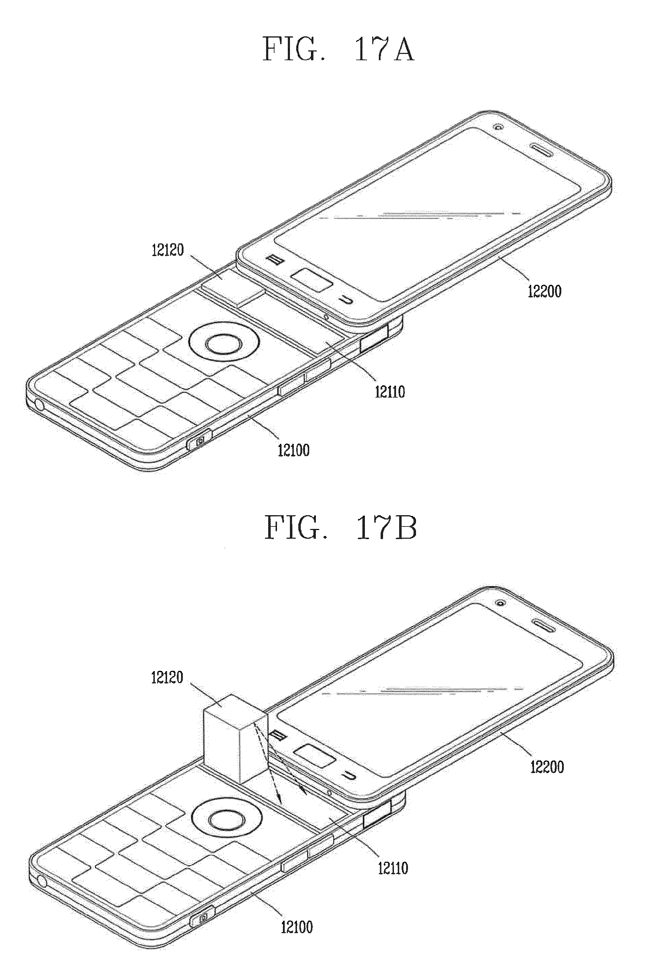

FIGS. 17A and 17B are conceptual views illustrating an example of the arrangement of an optical module 12120 and a filming unit 12110 in a slide type terminal associated with an embodiment of the present disclosure.

The second body 12200 having a display and the first body 12100 formed with a keypad on one surface thereof may be formed to implement a closed configuration and an open configuration. As illustrated in the drawing, either one body may be formed to slidably move with respect to the other body.

Furthermore, the optical module 12120 and the filming unit 12110 configured to receive light from the optical module 12120 may be formed in a predetermined region of the first body 12100 excluding a region disposed with the keypad.

The first body 12100 may include an accommodation portion into which the optical module 12120 can be inserted. The optical module 12120 may be formed to be inserted into or drawn out of the accommodation portion, and formed to be protruded on one surface of the first body 12100 by a predetermined height in an open configuration. The optical module 12120 may be formed along an inner circumferential surface of the accommodation portion in a slidably movable manner.

The protruded height of the optical module 12120 may be formed to vary, and the optical module 12120 may be formed to be fixed at a predetermined height. The angle of the irradiation unit 12122 for irradiating light on the filming unit 12110 may vary according to the height of the optical module 12120. Here, the filming unit 12110 may include a plurality of hologram patterns to display different hologram images according to the angle.

In this manner, the height of the optical module 12120 may be controlled to form a different hologram image. Furthermore, at least one hologram image may be formed in a space on one surface of the terminal.

When the first body 12100 and second body 12220 are formed to move in a first direction which is an extended direction of the terminal, the optical module 12120 may be formed to move in a second direction crossed with the first direction, namely, thickness direction.

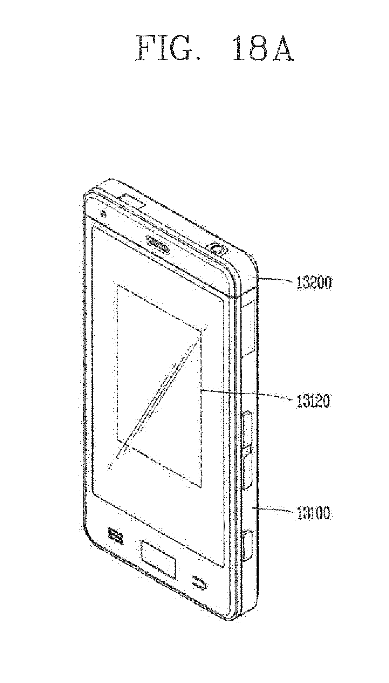

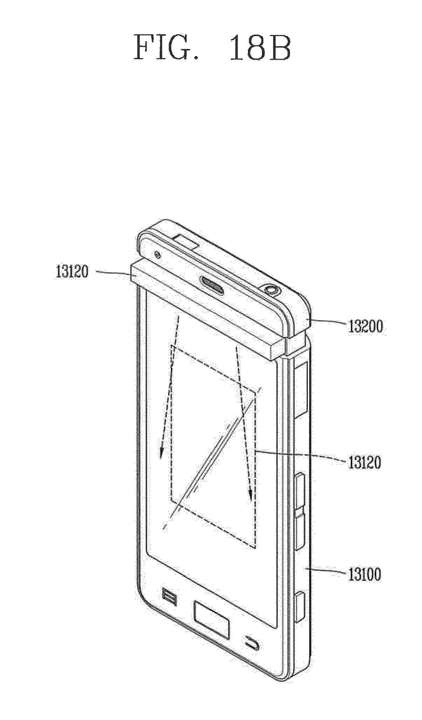

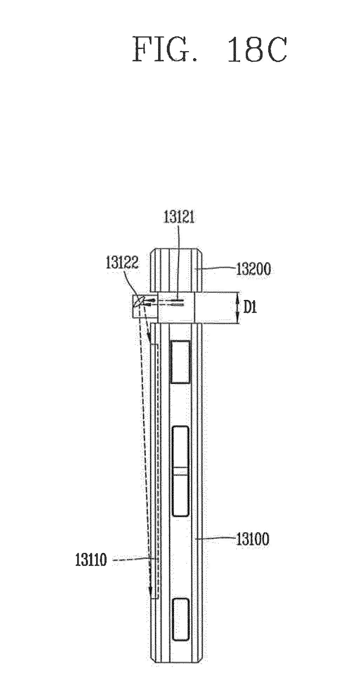

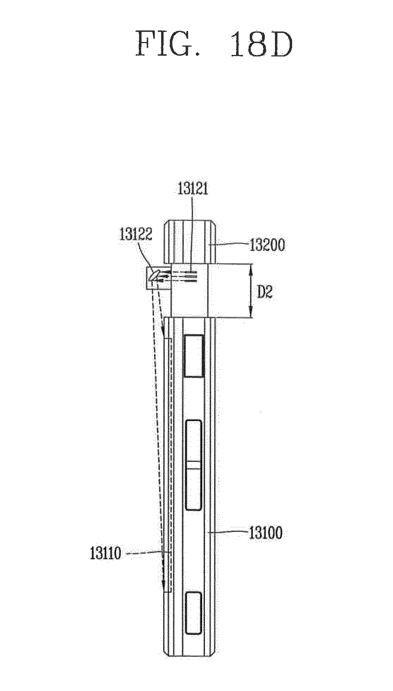

FIGS. 18A and 18B are conceptual views illustrating a change of a portion on which light based on slide movement is irradiated associated with an embodiment of the present disclosure.

The first body 13100 and second body 13200 may be formed to implement a closed configuration and an open configuration. As illustrated in the drawing, the second body 13200 may be formed to be accommodated into a groove formed on the first body 13100. Here, the second body 13200 may be formed to slidable move with respect to the first body 13100.

A filming unit 13110 may be formed on one surface of the first body 13100. Furthermore, the second body 13200 may include an accommodation portion into which the optical module 13120 can be inserted. The optical module 13120 may be formed to be inserted into or drawn out of the accommodation portion, and formed to be protruded on one surface of the second body 13200 by a predetermined height in an open configuration.

The protruded height of the optical module 13120 may be formed to vary, and the optical module 13120 may be formed to be fixed at a predetermined height. The angle of the irradiation unit 13122 for irradiating light on the filming unit 13110 may vary according to the height of the optical module 13120. Here, the filming unit 13110 may include a plurality of hologram patterns to display different hologram images according to the angle.

Furthermore, the filming unit 13110 is formed on the first body 13100, and the optical module 13120 is formed on the second body 13200, and thus the angle of light being irradiated on the filming unit 13110 may vary according to a distance between the first body 13100 and second body 13200. Furthermore, the first body 13100 and second body 13200 may be fixed to a distance being separated from each other by a predetermined distance.

Due to this, the filming unit 13110 may include a plurality of hologram patterns to display different hologram images, respectively, according to a distance by which the first body 13100 and second body 13200a are separated from each other.

Furthermore, even when the first body 13100 and second body 13200 display the same hologram image according to a distance by which they are separated from each other, the size thereof may vary.

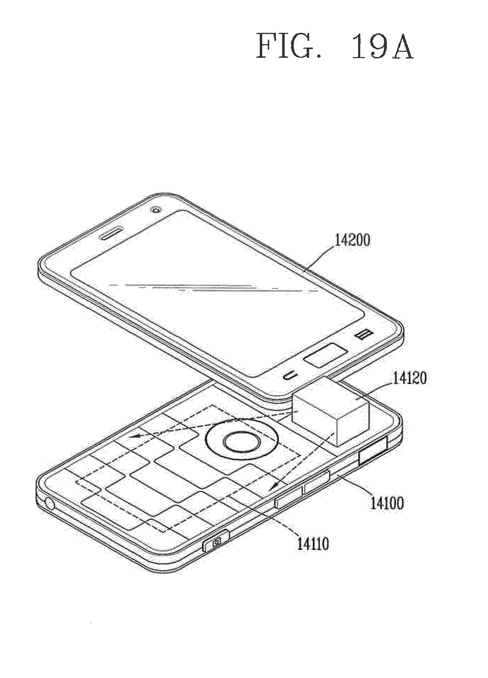

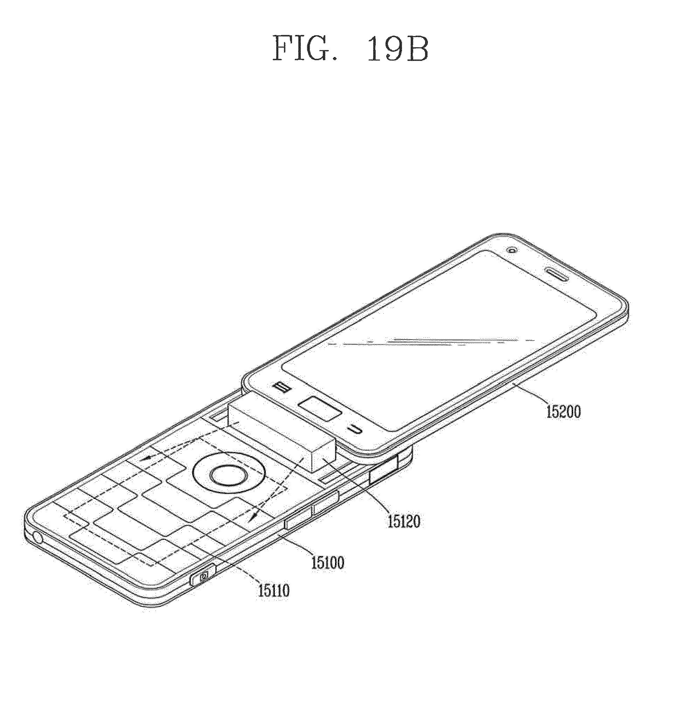

FIGS. 19A and 19B are conceptual views illustrating an example of a mobile terminal formed to implement a closed configuration and an open configuration associated with an embodiment of the present disclosure.

The first body 14100 and second body 14200 may be formed to implement a closed configuration and an open configuration. As illustrated in FIG. 19A, the first body 14100 and second body 14200 may be formed to move in a swivel manner. In other words, the first body 14100 may slidably move to brush against one surface of the second body 14200 along an axis formed on the second body 14200. Here, the first body 14100 and second body 14200 may be coupled to each other through a hinge module.

Furthermore, as illustrated in FIG. 19B, the first body 15100 and second body 15200 may be formed such that either one body slidably move with respect to the other body. Here, the first body 15100 and second body 15200 may be coupled to each other through a slide module.

The first body 15100 may include a display, and a filming unit 15110 may be formed in a predetermined region of the second body 15200. An optical module 15120 may be disposed adjacent to the filming unit 13110 to irradiate light on the filming unit 13110. The optical module 15120 may be formed to be inserted into or drawn out of an accommodation portion of the second body 15200.

The optical module 15120 may be formed to be protruded on one surface of the second body 15200 by a predetermined height in an open configuration.

The protruded height of the optical module 15120 may be formed to vary, and the optical module 15120 may be formed to be fixed at a predetermined protruded height. The angle of the irradiation unit 15122 for irradiating light on the filming unit 15110 may vary according to the height of the optical module 15120. Here, the filming unit 15110 may include a plurality of hologram patterns to display different hologram images according to the angle.

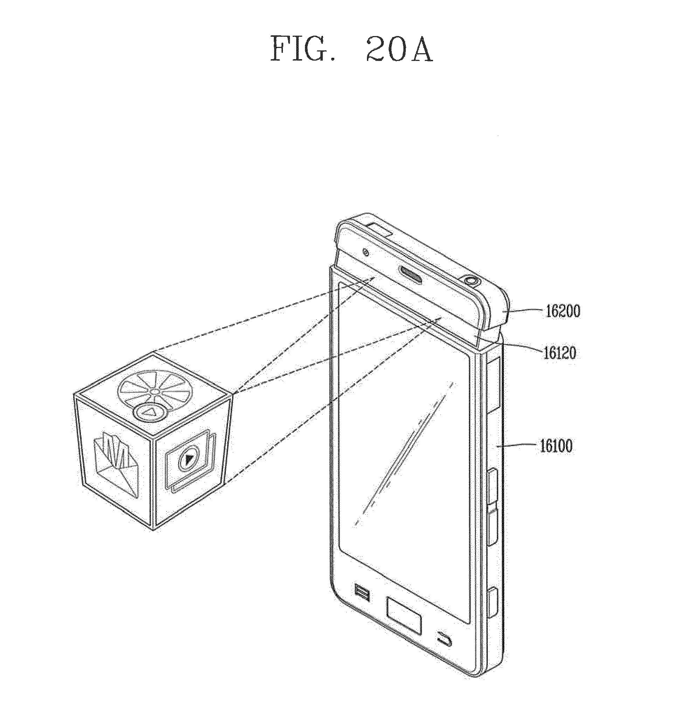

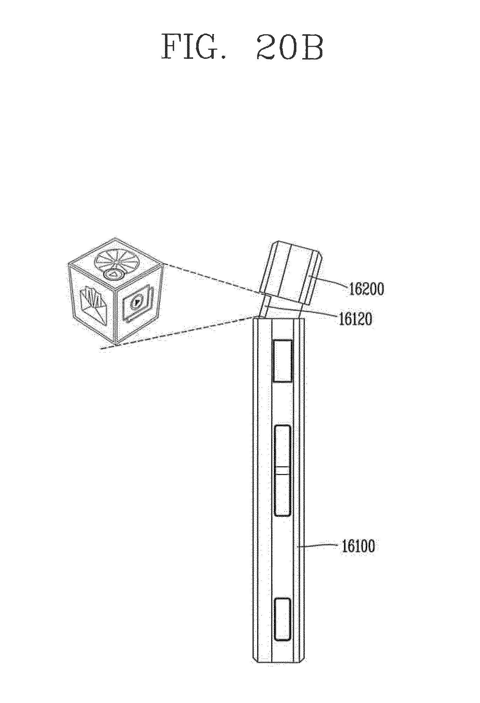

FIGS. 20A through 22C are conceptual views illustrating an example of a mobile terminal formed to reduce or cancel interference between the body and the filming unit.

As illustrated in FIGS. 20A through 22C, the first body 16100 and second body 16200 may be formed to implement a closed configuration and an open configuration. Furthermore, the second body 16200 may be formed to be accommodated into a groove formed on the first body 16100. Here, the second body 16200 may be formed to slidably move with respect to the first body 16100.

A display is formed on one surface of the first body 16100. The second body 16200 may include a hologram module configured to form a hologram image. The hologram module may include a filming unit, and may also include an irradiation unit and a light source.

Part of the hologram image irradiated from the second body 16200 may be hidden by the first body 16100 and interfered therewith. In order to prevent the interference, the first body 16100 and second body 16200 may be formed in a tiltable manner. Furthermore, the filming unit 16110 may be formed in a tiltable manner to prevent the interference.

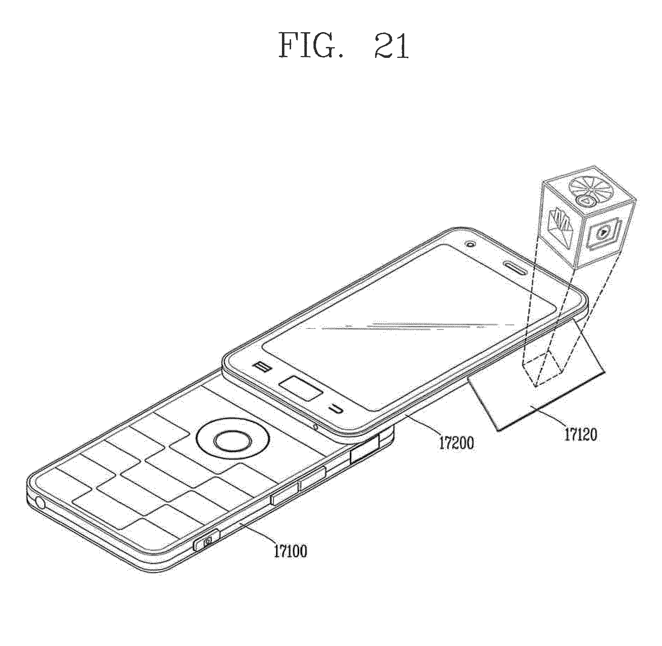

As illustrated in FIG. 21, the hologram module may be hinge-coupled to the terminal body so as to avoid the hologram module from being interfered with the terminal body. The hologram module may include a filming unit, and may also include an irradiation unit and a light source.

The hologram module may be coupled to the terminal body by a hinge module.

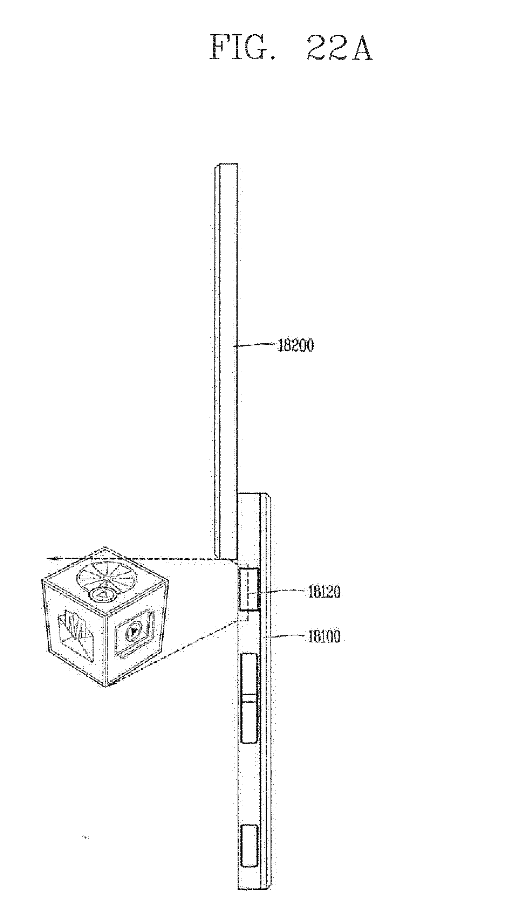

As illustrated in FIG. 22A through 22C, the first body 18100 and second body 18200 may be formed to implement a closed configuration and an open configuration. The first body 18100 and second body 18200 may be formed such that either one body slidably moves with respect to the other body. Here, the first body 18100 and second body 18200 may be coupled to each other through a slide module.

The first body 18100 may include a hologram module configured to form a hologram image. The hologram module may include a filming unit, and may also include an irradiation unit and a light source.

In FIG. 22A, a hologram image is projected on one surface of the first body 18100, and the projected hologram light may be hidden by the second body 18200.

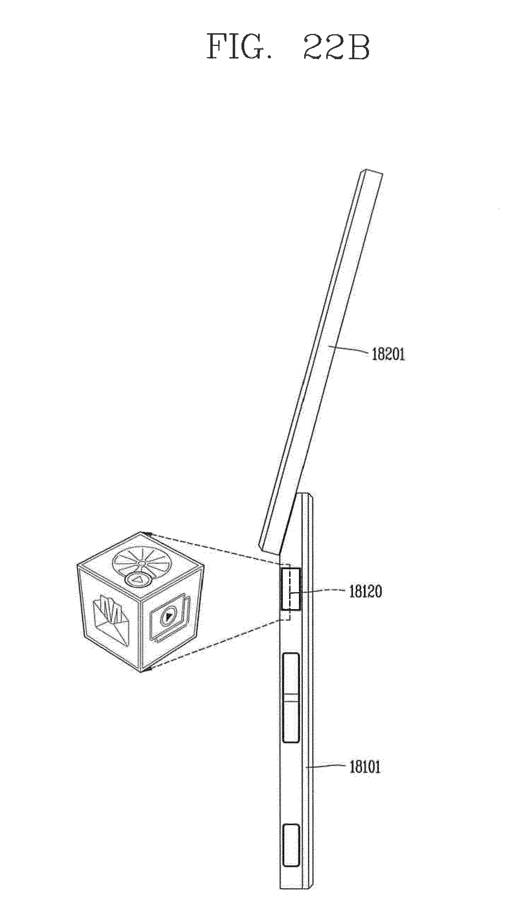

In this case, as illustrated in FIG. 22B, the second body 18201 may be formed in a tiltable manner. Due to this, it may be possible to suppress or reduce the interference of the second body 18201 with respect to hologram light formed from the first body 18101.

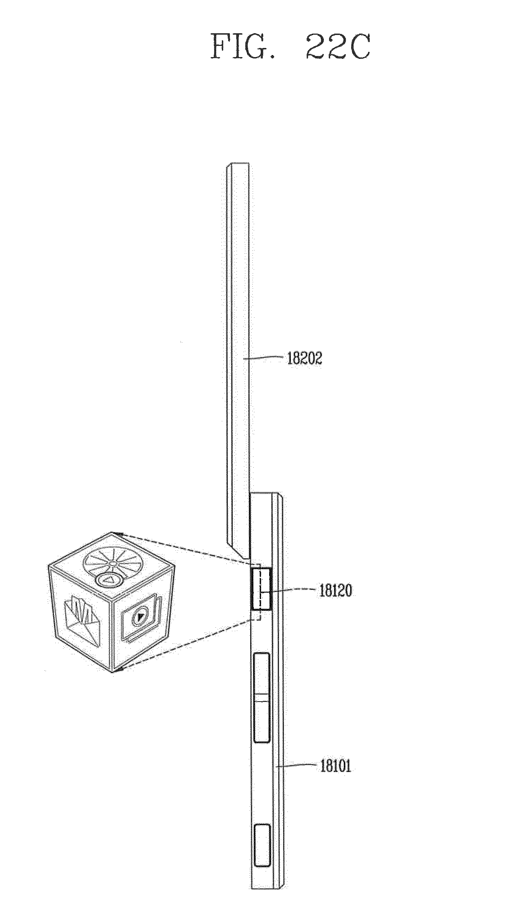

Furthermore, as illustrated in FIG. 22C, part of the shape of the second body 18202 may be changed to reduce the interference of the second body 18202. Due to this, it may be possible to suppress or reduce the interference of the second body 18202 with respect to hologram light formed from the first body 18102.

The configurations and methods according to the above-described embodiments will not be applicable in a limited way to the foregoing mobile terminal, and all or part of each embodiment may be selectively combined and configured to make various modifications thereto.

According to the embodiments of the present disclosure, a scheme for implementing a hologram image in a mobile terminal is proposed, and applicable to various industrial fields related thereto.

## Claims

1. A mobile terminal, comprising:
a first body and a second body detachably coupled to each other;
a first light source formed on the first body to supply light to the second body; and
a first filming unit formed on the second body to receive light from the first light source so as to form a first hologram image.

2. The mobile terminal of claim 1, wherein a coupling portion for coupling the first body to the second body comprises a light control unit formed to control light radiated from the first light source.

3. The mobile terminal of claim 1, wherein the first light source comprises at least any one of a lamp, a laser and an LED.

4. The mobile terminal of claim 1, wherein the second body further comprises a beam splitter formed to radiate light supplied from the first light source in at least two directions.

5. The mobile terminal of claim 4, wherein the second body further comprises a first irradiation unit and a second irradiation unit configured to irradiate the radiated lights toward one surface of the first filming unit, respectively.

6. The mobile terminal of claim 5, wherein one end of at least one of the first filming unit, first irradiation unit and second irradiation unit is fixed, and the other end thereof is formed to revolve around said one end.

7. The mobile terminal of claim 1, further comprising:
a second light source disposed on a rear surface of the first filming unit, and formed to radiate light through the first filming unit.

8. The mobile terminal of claim 7, wherein the second light source is a transparent display.

9. The mobile terminal of claim 8, wherein a reflective portion is formed to cover the transparent display.

10. The mobile terminal of claim 9, wherein at least one lens is disposed between the transparent display and the reflective portion.

11. The mobile terminal of claim 10, wherein the reflective portion is formed such that one end thereof is fixed, and the other end thereof revolves around said one end.

12. The mobile terminal of claim 1, wherein the first body comprises a second filming unit configured to receive light from the first light source so as to form a second hologram image.

13. The mobile terminal of claim 1, wherein the first filming unit is mounted on the second body in a replaceable manner.

14. A mobile terminal, comprising:
a first body and a second body detachably coupled to each other;
a first light source formed on the first body to supply light to the second body;
a beam splitter formed to radiate light supplied from the first light source in at least two directions; and
a first filming unit mounted on the second body to receive any one light radiated through the beam splitter so as to form a hologram image,
wherein light supplied to the beam splitter is hologram light formed due to a second filming unit integrated into the first body.

15. The mobile terminal of claim 14, wherein light is divided into first light and second light due to the beam splitter, and the first light is radiated on one surface of the second body, and the second light is irradiated on the first filming unit and then reflected on one surface of the second body, and
the first light and light reflected from the first filming unit are combined with each other to form a hologram composite image.

16. The mobile terminal of claim 14, further comprising:
a second light source disposed on a rear surface of the first filming unit, and formed to radiate light through the first filming unit.

17. The mobile terminal of claim 16, wherein the second light source is a transparent display.

18. The mobile terminal of claim 14, wherein the beam splitter comprises:
a first beam splitter configured to divide light supplied from the first light source into first light and second light; and
second beam splitters configured to divide the first and the second light in at least two lights, respectively.

19. The mobile terminal of claim 18, wherein at least any one of lights splitted from the second beam splitters is radiated on one surface of the second body, and
at least another one thereof is irradiated on the first filming unit and then reflected on one surface of the second body, and
the lights are combined with each other on one surface of the second body to form one or more hologram composite images.

20. A mobile terminal, comprising:
a first body and a second body detachably coupled to each other;
a first light source formed on the first body to supply light to the second body;
a beam splitter formed to radiate light supplied from the first light source in at least two directions;
a first and a third filming unit configured to receive any one light radiated through the beam splitter so as to form a hologram image; and
second light sources disposed between the beam splitter and filming units, respectively,
wherein a first hologram image is formed on one surface of the second body, and a second hologram image is formed on the other surface thereof.

21. A mobile terminal, comprising:
a terminal body;
a filming unit mounted on the body to form a hologram image when light is radiated;
an irradiation unit formed to radiate the light on the filming unit; and
a light source configured to supply light to the irradiation unit,
wherein the irradiation unit is formed in a relatively movable manner with respect to the filming unit to control the radiation of light on one surface of the filming unit.

22. The mobile terminal of claim 21, wherein the irradiation unit and the light source form an optical module in an integral manner, and
the optical module is formed in a slidably movable manner with respect to the body to control the radiation of light on one surface of the filming unit.

23. The mobile terminal of claim 22, wherein the optical module is formed in a slidably movable manner in a second direction crossed with a first direction with respect to the body extended in the first direction.

24. The mobile terminal of claim 22, wherein the light radiation of a light source and an irradiation unit with respect to the filming unit is controlled according to the slide movement distance to adjust the size of the hologram image.

25. The mobile terminal of claim 21, wherein the irradiation unit and the light source form an optical module in an integral manner, and
the optical module is hinge-coupled to revolve with respect to the body.

26. The mobile terminal of claim 21, further comprising:
a display disposed on a rear surface of the first filming unit, and formed to radiate light through the filming unit.

27. The mobile terminal of claim 26, wherein the display is a transparent display.
